(19) Europäisches Patentamt
European Patent Office
Office européen des brevets

(11) EP 2 518 828 A1

(12) **EUROPEAN PATENT APPLICATION**
published in accordance with Art. 153(4) EPC

(43) Date of publication:
**31.10.2012 Bulletin 2012/44**

(21) Application number: **10839523.7**

(22) Date of filing: **22.12.2010**

(51) Int Cl.:
***H01Q 1/38*** *(2006.01)* ***G06K 19/077*** *(2006.01)*
***H01Q 7/00*** *(2006.01)* ***H01Q 15/14*** *(2006.01)*

(86) International application number:
**PCT/JP2010/073248**

(87) International publication number:
**WO 2011/078293 (30.06.2011 Gazette 2011/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2009 JP 2009292898**
**14.10.2010 JP 2010231940**

(71) Applicant: **Asahi Glass Company, Limited**
**Tokyo 100-8405 (JP)**

(72) Inventors:
- **SONODA Ryuta**
  **Tokyo 100-8405 (JP)**
- **IKAWA, Koji**
  **Tokyo 100-8405 (JP)**
- **NIWANO, Kazuhiko**
  **Tokyo 100-8405 (JP)**
- **YANOSHITA, Tetsuya**
  **Tokyo 100-8405 (JP)**

(74) Representative: **Müller-Boré & Partner**
**Patentanwälte**
**Grafinger Straße 2**
**81671 München (DE)**

(54) **RFID TAG**

(57) There is provided an RFID tag that has a significantly wide antenna bandwidth and that operates more stably. The RFID tag is characterized by including a loop feeding element formed on a base material; an IC chip that is electrically connected to the loop feeding element and that is laid on the base material; and an artificial medium that includes a dielectric layer having a first surface and a second surface, a first conductive layer laid over the first surface, and a second conductive layer laid over the second surface and on which the base material is stacked, wherein the first surface is placed closer to the loop feeding element than the second surface; and, when viewed from a stack direction in which the loop feeding element is stacked on the artificial medium, the loop feeding element is placed so as to enclose a part of an edge portion of the first conductive layer of the artificial medium.

*FIG. 4*

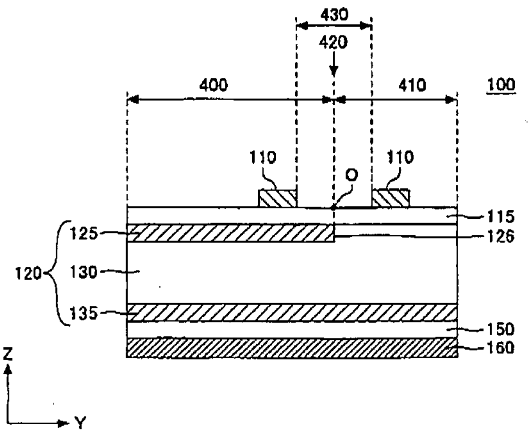


EP 2 518 828 A1

## Description

TECHNICAL FIELD

The present invention relates to an RFID tag.

BACKGROUND ART

RFID (Radio Frequency Identification) techniques have recently received attention as noncontact authentication techniques utilizing an electromagnetic field and a radio wave. In the RFID techniques, a device called as a reader reads information contained in an RFID tag (a generic name for media that exchange information by use of the RFID techniques, like IC tags and noncontact IC cards) having an antenna element with an implemented IC chip, thereby enabling authentication of a physical object, or the like. An UHF band and a 2.45 GHz band have principally been utilized for radio-type RFID.

Such a radio-type RFID tag generally operates by means of only a low-permittivity target. When affixed to metal or a high-permittivity material, the RFID tag faces a problem of undergoing performance deterioration, to thus become unable to read information. Accordingly, in order to solve the problem, RFID tags with antennas specially designed so as to enable affixing of the tags to targets, like metals, have hitherto been developed. A patch antenna is often utilized for the RFID tags. Since the patch antenna has a structure requiring a ground plane, a metallic attachment target can be utilized as the ground plane. In the meantime, when the patch antenna has the ground plane, the patch antenna can be activated regardless of whether or not an attachment target is a metal or a nonmetal only when the ground plane side of the patch antenna is attached to the target. Further, from the viewpoint of ease of establishment of impedance matching between the patch antenna and an IC chip used in the RFID tag, a loop feed element is occasionally used for power feeding of the patch antenna.

Patent Document 1, for instance, discloses a patch antenna capable of being used as an RFID tag, wherein a patch conductor and an impedance matching loop are placed, while remaining spaced apart from each other, in the same plane of a dielectric layer (Patent Document 1).

Related Art Document

Patent Document

Patent Document 1: International Publication No. WO 2008/006947 brochure

DISCLOSURE OF THE INVENTION

PROBLEMS TO BE SOLVED BY THE INVENTION

However, the antenna described in connection with Patent Document 1 is a patch antenna and has a problem of a narrow operation bandwidth. For this reason, even nominal fluctuations in environment factor bring about great deviation from an operating frequency of the antenna described in connection with Patent Document 1, which in turn may deteriorate superior characteristics.

The present invention has been conceived against the backdrop. The present invention is intended to provide an RFID tag that exhibits a significantly wide antenna bandwidth and that operates more stably.

MEANS FOR SOLVING THE PROBLEMS

The present invention provides an RFID tag comprising:

a loop feeding element formed on a base material;
an IC chip that is electrically connected to the loop feeding element and that is laid on the base material; and
an artificial medium that includes a dielectric layer having a first surface and a second surface, a first conductive layer laid over the first surface, and a second conductive layer laid over the second surface and on which the base material is stacked, wherein
the first surface is placed closer to the loop feeding element than the second surface; and,
when viewed from a stack direction in which the loop feeding element is to be stacked on the artificial medium, the loop feeding element is placed so as to enclose a part of an edge portion of the first conductive layer of the artificial medium.

In the RFID tag of the present invention, when viewed from the stack direction, the loop feeding element can also be placed in such a way that a center of the loop feeding element is aligned to the edge portion of the first conductive layer of the artificial medium. In the present patent application, the expression "center of the loop feeding element" signifies a center of a region (geometry) enclosed with the loop feeding element. However, when such a region (geometry) has a complicated shape and when a definite center of the region is uncertain, the "center of the loop feeding element" coincides with a centroid of the enclosed shape.

In the RFID tag of the present invention, a thickness of the base material can also fall within a range from 5 μm to 200 μm.

Moreover, a specific bandwidth B(%) is calculated by Equation 1 provided below on an assumption that, of radiation characteristics of the RFID tag of the present invention, a maximum value of radiation efficiency R is taken as $R_p$, a frequency at which the maximum radiation efficiency $R_p$ is attained is taken as fp, radiation efficiency that is lower than the maximum radiation efficiency $R_p$ by 3 dB is taken as and frequencies at which the radiation efficiency $_{R3dB}$ is acquired are taken as $f_1$ and $f_2$. (where $f_1 < f_2$), and an intermediate frequency between the frequencies $f_1$ and $f_2$ is taken as $f_r$; namely, specific bandwidth $B(\%) = (f_2 - f_1)/f_r \times 100$ (Eq. 1), the specific bandwidth B can exceed 15%.

The present invention provides an RFID tag comprising:

an artificial medium that includes a dielectric layer having an upper surface with a first region and a second region and a bottom surface opposing the upper surface, a first conductive layer laid over the first region of the dielectric layer, and a second conductive layer laid over the bottom surface of the dielectric layer;
an insulating base material placed on the first conductive layer laid over the first region of the dielectric layer and the second region of the dielectric layer;
a loop feeding element that is formed on the insulating base material and that forms a closed region extending across the first region and the second region of the dielectric layer when viewed from a direction perpendicular to the upper surface; and
an IC chip electrically connected to the loop feeding element.

The present invention provides an RFID tag comprising:

a feeding element fabricated on a base material;
an IC chip that is electrically connected to the loop feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein
the first surface is closer to the feeding element than the second surface;
the first surface has a first region where the first conductive layer is laid and a second region where the first conductive layer is not laid when viewed from a stack direction in which the feeding element is to be stacked on the artificial medium, and the first conductive layer has an edge portion corresponding to a border between the first region and the second region;
the feeding element has a loop line laid so as to enclose a part of the edge portion of the first conductive layer of the artificial medium when viewed from the stack direction; and
an additional line coupled to the loop line so as to divide a region enclosed with the loop line into at least two sub-regions is laid within the region.

Now, in the RFID tag of the present invention, the additional line can also be laid on the first conductive layer so as not to cross the edge portion when viewed from the stack direction.

Further, in the RFID tag of the present invention, the feeding element can further have a second additional line within the region enclosed with the loop line, and the second additional line can also be laid so as to cross the edge portion of the first conductive layer when viewed from the stack direction.

In this case, the second additional line can also be coupled to any position along the additional line.

The present invention also provides an RFID tag comprising:

a feeding element fabricated on a base material;
an IC chip that is electrically connected to the feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein
the first surface is placed closer to the feeding element than the second surface;
when viewed from a stack direction in which the feeding element is to be stacked on the artificial medium, the first surface has a first region where the first conductive layer is laid and a second region where the first conductive layer is not laid, and the first conductive layer has an edge portion corresponding to a border between the first region and the second region;
the feeding element has a loop line laid so as to enclose a part of the edge portion of the first conductive layer of the artificial medium when viewed from the stack direction;
the loop line of the feeding element is coupled to the IC chip, and the IC chip is placed in an area of the loop line within the second region when viewed from the stack direction; and,
when viewed from the stack direction, a distance from the position of the loop line where the IC chip is placed to a position where the loop line first crosses the edge portion of the first conductive layer in a first direction aligned to the loop line is different from a distance from the position of the loop line where the IC chip is placed to a position where the loop line first crosses the edge portion of the first conductive layer along the loop line and in a second direction opposite to the first direction.

In the RFID tag of the present invention, the loop line can assume a substantially rectangular shape, and the IC chip can also be placed at a corner of the loop line.

The present invention provides an RFID tag comprising:

a feeding element fabricated on a base material;
an IC chip that is electrically connected to the feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein
the first surface is placed closer to the feeding element than the second surface;
when viewed from a stack direction in which the feeding element is to be stacked on the artificial medium, the first surface has a first region where the first conductive layer is laid and a second region where the first conductive layer is not laid, and the first conductive layer has an edge portion corresponding to a border between the first region and the second region;
the feeding element has a loop line laid so as to enclose a part of the edge portion of the first conductive layer of the artificial medium when viewed from the stack direction;
the first conductive layer assumes a substantially rectangular shape when viewed in the stack direction;
and
a pair of diagonally-aligned corners is eliminated from the first conductive layer or has projections.

The present invention further provides an RFID tag comprising:

a feeding element fabricated on a base material;
an IC chip that is electrically connected to the feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein
the first surface is placed closer to the feeding element than the second surface;
when viewed from a stack direction in which the feeding element is to be stacked on the artificial medium, the first surface has a first region on which the first conductive layer is placed and second and third regions where the first conductive layer is not placed, the second region of the dielectric layer adjoins to the first region, and the third region is on the other side of the second region and adjoins to the first region and does not adjoin to the second region;
the first conductive layer has an edge portion corresponding to a border between the first region and the second region; and,
when viewed from the stack direction, the feeding element has a loop line laid so as to enclose a part of the edge portion of the first conductive layer of the artificial medium, and the loop line is laid only on the first and second regions.

The present invention further provides an RFID tag comprising:

a feeding element fabricated on a base material;
an IC chip that is electrically connected to the feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein
the first surface is placed closer to the feeding element than the second surface;
when viewed from a stack direction in which the feeding element is to be stacked on the artificial medium, the feeding element has a loop line laid so as to enclose a part of an edge portion of the first conductive layer of the artificial medium;
when viewed from the stack direction, the dielectric layer has a first region and second to fourth regions adjoining to the first region, the third and fourth regions are placed so as to oppose each other with the first region sandwiched therebetween, and the second region adjoins to each of the third and fourth regions;
when viewed from the stack direction, the first conductive layer is placed so as to cover the first region and not on the second region, the third region, and the fourth region; and
when viewed from the stack direction, the loop line is placed only on the first and second regions.

The present invention also provides an RFID tag comprising:

a feeding element fabricated on a base material;
an IC chip that is electrically connected to the feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein
the first surface is placed closer to the feeding element than the second surface;
when viewed from a stack direction in which the feeding element is to be stacked on the artificial medium, the feeding element has a loop line laid so as to enclose a part of an edge portion of the first conductive layer of the artificial medium;
when viewed from the stack direction, the dielectric layer has a first region, a second region, and a third region, the second region adjoins to the first region, and the third region adjoins to the first region on the other side of the second region;
the first conductive layer is placed so as to cover the first region and not placed on the second region or the third region; and
the loop line is placed only on the first and second regions.

The RFID tag can also comprise: a fourth region and a fifth region that adjoin to the first region when viewed from the stack direction, wherein the fourth region and the fifth region can also be placed so as to oppose each other with the first region sandwiched therebetween, the second region adjoins to each of the fourth region and the fifth region, and the third region adjoins to each of the fourth region and the fifth region; and the loop line can also be placed on neither the fourth region nor the fifth region.

EFFECTS OF THE INVENTION

The present invention makes it possible to provide an RFID tag that exhibits a significantly wide antenna bandwidth and that operates more stably.

BRIEF DESCRIPTION OF THE DRAWINGS

Fig. 1 is an example schematic top view of a related-art patch antenna for use in an RFID tag.
Fig. 2 is a graph showing a frequency dependence of transmission power of a transmitting and receiving device required to identify the RFID tag made up of the patch antenna shown in Fig. 1.
Fig. 3 is an example schematic top view of the RFID tag of the present invention.
Fig. 4 is a view schematically showing an example cross section by means of line A-A of the RFID tag shown in Fig. 3.
Fig. 5 is a virtual top view acquired when an insulation base material 115 is eliminated from the RFID tag shown in Fig. 3.
Fig. 6 is a schematic cross-sectional view showing a relative position between a loop feeding element and an artificial medium.
Fig. 7 is a schematic cross-sectional view showing still another relative position between the loop feeding element and the artificial medium.
Fig. 8 is a schematic cross-sectional view showing yet another relative position between the loop feeding element and the artificial medium.

Fig. 9 is a schematic top view of an RFID tag in which the loop feeding element has a capacitive coupling loop.

Fig. 10 is a graph showing a relationship between a position "y" and a specific bandwidth B of the loop feeding element in the RFID tag of the present invention.

Fig. 11 is a graph schematically showing a frequency dependence of radiation efficiency used in calculation of the specific bandwidth B.

Fig. 12 is a graph showing a relationship between a thickness of the insulating base material and the specific bandwidth B in the RFID tag of the present invention.

Fig. 13 is a graph showing a relationship between the thickness of the insulating base material and a relative maximum radiation efficiency in the RFID tag of the present invention.

Fig. 14 is a schematic top view of a second RFID tag of the present invention.

Fig. 15A is a graph showing measurement results on impedance of RFID tags 100 and 200.

Fig. 15B is a graph showing the measurement results on the impedance of the RFID tags 100 and 200.

Fig. 16 is a graph showing measurement results on S11 (a return loss) of the RFID tags 100 and 200.

Fig. 17 is another example schematic top view of the second RFID tag of the present invention.

Fig. 18A is a graph showing analysis results on impedance of RFID tags 200 and 201.

Fig. 18B is a graph showing the analysis results on the impedance of the RFID tags 200 and 201.

Fig. 19 is a graph showing analysis results on S11 (a return loss) of the RFID tags 200 and 201.

Fig. 20 is a schematic top view of a third RFID tag of the present invention.

Fig. 21 is a graph showing a comparison between obtained analysis results on S11 (a return loss) of the third RFID tag of the present invention and the analysis results on the first RFID tag.

Fig. 22 is a schematic top view of an example modification of the third RFID tag of the present invention.

Fig. 23 is a cross-sectional view of the RFID tag shown in Fig. 22 that is taken along line A-A.

Fig. 24 is a graph showing obtained analysis results on S11 (a return loss) of an example modification of the third RFID tag of the present invention.

Fig. 25 is a schematic top view of an example fourth RFID tag of the present invention.

Fig. 26 is a graph showing analysis results on an actual gain acquired in the fourth RFID tag.

Fig. 27 is a schematic top view of an example configuration of a fifth RFID tag of the present invention.

Fig. 28 is a schematic cross-sectional view of the fifth RFID tag taken along line B-B shown in Fig. 27.

Fig. 29 is a graph showing analysis results on S11 (a return loss) acquired when the fifth RFID tag of the present invention is put on a metallic target and on a nonmetallic target.

Fig. 30 is a schematic top view of a sixth RFID tag of the present invention.

Fig. 31 is a cross-sectional view of the RFID tag taken along line B-B shown in Fig. 30.

Fig. 32A is a graph showing analysis results on a directivity gain acquired within an XY plane of the sixth RFID tag.

Fig. 32B is a graph showing analysis results on a directivity gain acquired within a YZ plane of the sixth RFID tag.

Fig. 33 is a schematic top view of a seventh RFID tag of the present invention.

Fig. 34 is a cross-sectional view of the RFID tag taken along line C-C shown in Fig. 33.

Fig. 35A is a graph showing analysis results on a directivity gain acquired within an XY plane of the seventh RFID tag.

Fig. 35B is a graph showing analysis results on a directivity gain acquired within a YZ plane of the seventh RFID tag.

Fig. 36 is a graph showing a relationship between a front-back directivity gain ratio acquired within an XY plane of the seventh RFID tag and a difference in lengths of conductor layers making up the artificial medium.

Fig. 37 is a schematic top view of an eighth RFID tag of the present invention.

Fig. 38 is a cross-sectional view of the RFID tag taken along line D-D shown in Fig. 37.

Fig. 39A is a graph showing analysis results on a directivity gain acquired within an XZ plane of the eighth RFID tag.

Fig. 39B is a graph showing analysis results on a directivity gain acquired within a YZ plane of the eighth RFID tag.

## MODES FOR CARRYING OUT THE INVENTION

First, in order to attain better comprehension of characteristics of the present invention, an example related-art RFID tag is briefly explained by reference to Figs. 1 and 2. Fig. 1 is a top view that is equivalent to Fig. 16 in Patent Document 1 and that shows a related-art patch antenna for use in a RFID tag. Fig. 2 is a graph that is equivalent to Fig. 21 in Patent Document 1 and that shows one characteristic of the patch antenna shown in Fig. 1.

As shown in Fig. 1, a related-art patch antenna 1 has a first conductive patch 20, a second conductive patch 25, and an impedance matching loop 30, all of which are implemented on a substrate 10. The first and second conductive patches 20 and 25 and the impedance matching loop 30 are set within the same plane of the substrate 10. The first conductive patch 20 is equivalent to a low frequency patch, and the second conductive patch 25 is equivalent to a high frequency patch. The impedance matching loop 30 is equipped with a chip 35.

Fig. 2 shows a frequency dependence of transmission power of the patch antenna 1. As shown in Fig. 2, the patch antenna 1 exhibits two peaks, or a peak P1 and a peak P2, at a frequency of about 865 MHz and a frequency of about 920 MHz, respectively.

However, as is obvious from Fig. 2, bandwidths of the patch antenna 1 are considerably narrow. For instance, a frequency bandwidth of the peak P1 where transmission power changes from the minimum value (a peak value) by merely 3 dB is of the order of 5 MHz. In more specific explanation, a peak value of transmission power achieved at the peak P1 is 18 dBm in Fig. 2. A frequency bandwidth belonging to a range where the transmission power assumes a value of -3 dB with reference to the peak value; namely, 21 dBm, is 5 MHz. In general, when the frequency bandwidth belonging to the range where a value of -3 dB is assumed with reference to the peak value is of the order of 5 MHz, a range of design of an RFID tag becomes narrower. As a consequence, in the related-art RFID tag, nominal fluctuations in environment factor bring about a great deviation from an operating frequency of the antenna, which in turn incurs a high probability of loss of superior characteristics.

The inventors of the present invention found that the problems, such as those described above, were solved by use of an artificial medium for the RFID tag and putting the artificial medium and a loop feeding element in a specific relative positional relationship.

Specifically, in the present invention, an RFID tag has a loop feeding element formed on a base material and an artificial medium on which the base material is to be stacked, wherein
the artificial medium has a dielectric layer having a first surface and a second surface, a first conductive layer laid over the first surface, and a second conductive layer laid over the second surface;
the first surface is placed closer to the loop feeding element than the second surface; and
the loop feeding element is placed so as to enclose a part of an edge portion of the first conductive layer of the artificial medium when viewed in a stack direction in which the loop feeding element is to be stacked on the artificial medium.

As a result of the RFID tag being configured as mentioned above, the antenna bandwidth is significantly broadened when compared with the related-art antenna band width, so that an RFID tag capable of operating more stably can be provided.

The present invention is hereunder described in more detail by reference to the drawings.

(Configuration of the RFID tag of the present invention)

A specific configuration of the RFID tag of the present invention is now described. Fig. 3 shows an example schematic top view of the RFID tag of the present invention. Fig. 4 shows an example schematic cross-sectional view of the RFID tag shown in Fig. 3 that is taken along line A-A. Moreover, Fig. 5 shows a virtual top view acquired when an insulating base material 115 is eliminated from the RFID tag shown in Fig. 3 in order to make clear a positional relationship between the loop feeding element and the artificial medium.

As shown in Figs. 3 and 4, an RFID tag 100 of the present invention has an artificial medium 120, the insulating base material 115 laid over the artificial medium 120, and a loop feeding element 110 laid over the insulating base material 115. In addition, when the RFID tag 100 is actually used, another dielectric 150 is placed between a (metal) mount target 160 and the RFID tag 100. Consequently, Fig. 4 shows a configuration including the elements.

The loop feeding element 110 is made up of; for instance, a linear conductive member having a certain line width, and the conductive member assumes various forms, such as a rectangular form and a square form. The rectangular form referred to herein is not limited to a form whose interior angles are right angles, such as a rectangular form and a circular form, and encompasses a trapezoid and a parallelogram. Moreover, the rectangular form includes a form having rounded corners. Further, in addition to including a precise circle or a true circle that is equidistantly spaced apart from one point on a plane, the circle encompasses an ellipse, such as that formed from a partially deformed precise circle, an egg-shaped form or an oval. In addition to these forms, the conductive members can assume various forms. A line width of the loop feeding element 110 is arbitrarily selected so as to meet required specifications.

Such a loop feeding element is not limited to the shape, such as that mentioned above. The loop feeding element can be made more practical by making a contrivance to the loop shape. For instance, in the present invention, the loop is a onefold structure. However, the feeding element can also be formed into a twofold structure, a threefold structure, or another structure, to thus assume a plurality of current paths. Moreover, when at least one loop is a closed loop, a gap can be provided at an arbitrary point along the loop, to thus create an open loop. In addition, the thickness of the loop shape can also be locally changed. Furthermore, a parasitic element can also be placed around the loop feeding element.

An IC chip 111 is formed on the artificial medium 120 so as to be electrically connected to the loop feeding element 110. The IC chip 111 can also be formed on the loop feeding element 110.

The artificial medium 120 has a dielectric layer 130, a first conductive layer 125 laid over an upper surface of the dielectric layer 130, and a second conductive layer 135 laid at a bottom surface of the artificial medium 120 where it faces an upper surface of the dielectric layer 130.

As shown in Figs. 4 and 5, the upper surface of the dielectric layer 130 of the artificial medium 120 has a first region 400 and a second region 410 adjoining the first region 400. The first conductive layer 125 is formed on an upper surface of the first region 400 of the dielectric layer 130. In the meantime, the first conductive layer 125 is not formed on an upper surface of the second region 410 of the dielectric layer 130, so that the upper surface of the dielectric layer 130 becomes exposed. In Figs. 4 and 5, a boundary line 420 represents a virtual border between the first region 400 and the second region 410. In Fig. 5, the first region 400 and the second region 410 each assume a rectangle shape. However, needless to say, these regions are not limited to the shape. On the other hand, the second conductive layer 135 is laid over an entire bottom surface of the dielectric layer 130 along Y direction in Fig. 4.

As is obvious from Fig. 5, the loop feeding element 110 is laid so as to extend over both the first region 400 and the second region 410 of the dielectric layer 130. Specifically, a closed region 430 enclosed with the loop feeding element 110 is formed so as to include the virtual border line 420. When the RFID tag 100 is viewed from above, the entirety of the loop feeding element 110 is not placed over the first conductive layer 125, but only some of the loop feeding element 110 is placed on the first conductive layer 125.

Put another way, in the embodiment shown in Fig. 4, when viewed from above (or in Z direction), the loop feeding element 110 is placed in such a way that a center portion (point 0) of the loop feeding element 110 along the Y direction substantially coincides with an edge portion 126 of the first conductive layer 125 of the artificial medium 120. However, the embodiment is a mere example, and the present invention is not restricted to such a configuration. Specifically, in the present invention, the loop feeding element 110 and the artificial medium 120 can be placed at any arbitrary relative positions, as long as the loop feeding element 110 surrounds a part of the edge portion 126 of the first conductive layer 125 of the artificial medium 120.

Fig. 6 shows an example layout of the RFID tag 100 of the present invention in which the loop feeding element 110 and the artificial medium 120 remain most spaced apart from each other along the Y direction. In the layout shown in Fig. 6, a left end 110L of the closed region 430 formed from the loop feeding element 110 coincides with the edge portion 126 of the first conductive layer 125 when viewed from a direction parallel to the Z direction.

Fig. 7 shows another example layout of the RFID tag 100 of the present invention in which the loop feeding element 110 and the artificial medium 120 remain most spaced apart from each other along the Y direction. In the layout shown in Fig. 7, a right end 110R of the closed region 430 formed from the loop feeding element 110 coincides with the edge portion 126 of the first conductive layer 125 when viewed from a direction parallel to the Z direction.

It is also manifest to those who are versed in the art that an advantage of the present invention to be provided below is yielded even by means of a positional relationship between the loop feeding element 110 and the artificial medium 120 shown in Figs. 6 and 7 as in the case of their layout shown in Fig. 4.

In the RFID tag 100 of the present invention, no limitations are specifically imposed on the artificial medium 120 or dimensions, materials, and the like, of the respective layers making up the artificial medium.

In the present invention, it is manifest to those who are versed in the art that no limitations are specifically imposed on the relative positional relationship between the loop feeding element 110 and the artificial medium 120 in the X direction shown in Fig. 3.

For instance, when the RFID tag is viewed from above as shown in Fig. 8, the loop feeding element 110 can also be laid so as to surround a point of interconnection of the two boundary lines 420 and 421; namely, a corner of the first conductive layer 125.

By adoption of such a configuration, the antenna bandwidth can be broadened. In Fig. 8, the loop has a onefold structure. However, needless to say, the loop can also be formed into a twofold structure, a threefold structure, or another structure, to thus assume a plurality of current paths.

In the RFID tag of the present invention, the loop feeding element does not always need to assume a geometrical shape of "closed loop". For instance, the loop feeding element can also have a capacitively coupled loop.

Fig. 9 shows a top view of an RFID tag equipped with a loop feeding element having such a capacitively coupled loop. Incidentally, the insulating base material is omitted from Fig. 9 for clarification purpose.

In contrast to the RFID tag 100 shown in Fig. 5, an RFID tag 101 has a loop feeding element 110' with a capacitive coupling loop, as shown in Fig. 9.

There is yielded an advantage of the ability to broaden an antenna bandwidth as a result of adoption of such a configuration. In Fig. 9, the loop has a onefold structure. However, needless to say, the loop can also be formed into a twofold structure, a threefold structure, or another structure, to thus assume a plurality of current paths.

(Evaluation of characteristics of the RFID tag of the present invention)

Evaluation results on characteristics of the RFID tag 100 of the present invention shown in Figs. 3 and 4 are now described. The results were obtained by use of a commercially-available electromagnetic field simulator.

Fig. 10 shows influence, on a specific bandwidth B, of a relative positional relationship between the loop feeding element 110 and the artificial medium 120 that is calculated from radiation characteristics of the RFID tag 100. Parameter values provided below were used in simulation.

The loop feeding element 110: an entire length (including a line width) of 17 mm in the X direction (see Fig. 3), an entire length (including a line width) of 3.5 mm in the Y direction (see Fig. 3), and a line width of 0.5 mm;
the insulating base material 115: 40.25 mm long in the X direction (see Fig. 3), 15 mm long in the Y direction (see Fig. 3), a thickness of 50 μm, a relative permittivity of four, and a dielectric loss tanδ = 0.1;
the artificial medium 120: the first conductive layer 125 (made from copper) that is 40.25 mm long in the X direction (see Fig. 3), 10 mm long in the Y direction (see Fig. 3), and 18 μm thick; the second conductive layer 135 (made from copper) that is 40.25 mm long in the X direction (see Fig. 3), 15 mm long in the Y direction (see Fig. 3), and 18 μm thick; and the dielectric layer 130 that is 40.25 mm long in the X direction (see Fig. 3) and 15 mm long in the Y direction (see Fig. 3) and that has a relative permittivity of 17.8 and a dielectric loss tanδ = 0.003; and the artificial medium 120 having an entire thickness of 0.6 mm
Others: the second dielectric layer 150 that is 40.25 mm long in the X direction (see Fig. 3) and 15 mm long in the Y direction (see Fig. 3) and that has a relative permittivity of four and a dielectric loss tanδ = 0.1.

A position "y" of the loop feeding element 110 plotted along a horizontal axis of Fig. 10 is represented by an amount of displacement of a center O of the loop feeding element 110 in the Y direction (the position of the boundary line 420) from the edge portion 126 of the first conductive layer 125. Accordingly, as shown in Fig. 4, when the center O of the loop feeding element 110 and the edge portion 126 of the first conductive layer 125 are aligned to each other in the Z-direction, a value achieved on the horizontal axis of Fig. 10 is zero. Further, as shown in Fig. 6, when the left end 110L of the closed region 430 made by the loop feeding element 110 is aligned to the edge portion 126 of the first conductive layer 125 along the Z-direction, the value achieved on the horizontal axis of Fig. 10 is 1.75 mm. Likewise, as shown in Fig. 7, when the right end 110R of the closed region 430 made by the loop feeding element 110 is aligned to the edge portion 126 of the first conductive layer 125 along the Z-direction, the value achieved on the horizontal axis of Fig. 10 is -1.75 mm.

The specific bandwidth B is calculated as follows.

Fig. 11 schematically shows a graph of radiation characteristics of the RFID tag 100 used in calculating the specific bandwidth B. In the drawing, a horizontal axis represents a frequency "f," and a vertical axis represents radiation efficiency R. In the usual case, an upwardly-pointed parabola, such as that shown in Fig. 11, is obtained as a relationship between a frequency "f" and radiation efficiency R. Now, the maximum value of radiation efficiency R is taken as $R_p$ and a frequency at which the maximum radiation efficiency $R_p$ is obtained is taken as fp. Further, radiation efficiency that is lower than the maximum radiation efficiency $R_p$ by 3 dB is taken as $R_{3dB}$. A frequency at which the value is obtained is taken as $f_1$ and $f_2$ (where $f_1 < f_2$). Moreover, an intermediate frequency between $f_1$ and $f_2$ is taken as $f_r$.

The specific bandwidth B is calculated by the following equation through use of the parameters.

$$\text{Specific bandwidth B (\%)} = (f_2 - f_1)/f_r \times 100$$

It is obvious from the equation that the specific bandwidth B becomes an index to the antenna bandwidth.

The result shown in Fig. 10 shows that, when the loop feeding element 110 is placed so as to enclose the edge portion 126 of the first conductive layer 125; namely, when the position "y" of the loop feeding element falls within a range from $-1.75 < y < +1.75$, the specific bandwidth B is in excess of 15%. From the above, the RFID tag 100 of the present invention is forecast to exhibit a considerably wide bandwidth and enhanced operation stability of the antenna.

Fig. 12 shows a relationship between the thickness of the insulating base material 115 and the specific bandwidth B calculated from the radiation characteristics of the RFID tag 100 when the position "y" of the loop feeding element is taken as zero (i.e., when the loop feeding element is arranged as shown in Fig. 4). In the simulator, a finite size is set solely for a metal layer, and all dielectric sections are handled as having infinite dimensions in an XY direction. Specifically, in Figs. 3 and 4, the insulating base material 115, the dielectric layer 130, and the other dielectric substance 150 are calculated as having infinite dimensions.

The result shows that, when the thickness of the insulating base material 115 is in a range of at least 200 μm or less, a considerably large specific bandwidth B is obtained.

Fig. 13 shows a relationship between the thickness of the insulating base material 115 and relative maximum radiation efficiency (dB) calculated from the radiation characteristics of the RFID tag 100 when the position "y" of the loop feeding element is taken as zero (i.e., when the loop feeding element is arranged as shown in Fig. 4).

The relative maximum radiation efficiency is calculated as follows. Provided that a maximum value $R_p$ (see Fig. 11) of the radiation efficiency R obtained when the thickness of the insulating base material 115 is 5 μm is taken as a reference value (hereinafter referred to as an "$R_{p5}$"), a difference between the maximum value $R_p$ of the radiation efficiency R acquired at each of thicknesses of the insulating base material 115 and the reference value $R_{P5}$ is determined, and the difference is taken as relative maximum radiation efficiency.

A result provided in Fig. 13 shows that the maximum radiation efficiency, which is substantially similar to that achieved when the insulating base material 115 assumes a thickness of 5 μm, is obtained when the thickness of the insulating base material 115 falls within a range from 10 μm to 200 μm.

From the above, the configuration of the present invention shows that only the bandwidth tends to extend while the maximum peak value $R_p$ of radiation efficiency R remains substantially unchanged, particularly, when the thickness of the insulating base material 115 is in the range from 5 μm to 200 μm. 200 μm.

(Second configuration of the RFID tag of the present invention)

A second configuration (hereinafter called a "second RFID tag") of the RFID tag of the present invention is now described.

In the preceding embodiment, the significance of the antenna bandwidth of the RFID tag 100 of the present invention has been described while "radiation efficiency," or energy conversion efficiency achieved between the antenna and a space, is taken as an index. However, there are many cases where the antenna characteristics actually depend on a degree of impedance matching as well as on "radiation efficiency." Therefore, it can be said that taking the antenna's "actual gain" into account is preferable when the characteristics are reviewed in the real environment.

The "actual gain" referred to herein is defined as a value determined by subtracting the radiation efficiency η (a loss attributable to a dielectric loss and a conductor loss) and a mismatching loss (a loss attributable to impedance mismatch) from the directivity gain $G_d$. Specifically, the actual gain is expressed by

$$\text{Actual gain } G_w = (1 - \Gamma^2) \times \text{radiation efficiency } \eta \times \text{directivity gain } G_d \quad \text{(Expression 2)}$$

where reference symbol Γ denotes a reflection coefficient. S11 (a return loss) is a parameter determined by impedance matching between the antenna and the IC chip. Since the "actual gain" contains both influence of the "radiation efficiency" and influence of S11 (a return loss), more realistic antenna characteristics can be evaluated by use of the index.

Fig. 14 shows a schematic top view of the second RFID tag that yields more significant characteristics when a consideration is given to the "actual gain."

As shown in Fig. 14, a second RFID tag 200 basically has a configuration similar to that of the RFID tag 100 shown in Figs. 3 to 5. Accordingly, constituent members shown in Fig. 14 that are similar to those shown in Figs. 3 to 5 are assigned three-digit reference numerals made by prefixing each of the reference numerals shown in Figs. 3 to 5 with 100. (An insulating base material 215 equivalent to the insulating base material 115 shown in Figs. 3 and 4, incidentally, is omitted from Fig. 14 for the purpose of clarification).

However, the configuration of a loop feeding element 210 in the RFID tag 200 is greatly different from the configuration of its counterpart in the RFID tag 100 shown in Figs. 3 to 5. Specifically, the loop feeding element 210 in the RFID tag 200 has two loops 210A and 210B. Of these loops, the first loop 210A is equivalent to the loop feeding element 110 shown in Figs. 3 to 5. When the RFID tag 200 is viewed from above, the loop 210A is placed on an artificial medium 220 so as to enclose a part of an edge portion of a first conductive layer 225 of the artificial medium 220 (i.e. , the virtual boundary line 420) . In the meantime, when the RFID tag 200 is viewed from above, the second loop 210B is placed so as to fall within a region of the first conductive layer 225 of the artificial medium 220.

Alternatively, when viewed from anther standpoint, the loop feeding element 210 can also be regarded as a configuration made by coupling, at a position above the first conductive layer 225 of the artificial medium 220, a line 210P extending in parallel with the X direction to an element equivalent to the loop feeding element 110 of the RFID tag 100 shown in Figs. 3 to 5. The line 210P partitions the region enclosed with the loop feeding element 210 into two sub-regions.

In the second RFID tag 200, such a configuration of the loop feeding element 210 makes it possible to establish impedance matching between the IC chip 211 and the loop feeding element 210 with comparative ease. Moreover, the bandwidth of an actual gain of the second RFID tag 200 is thereby enhanced.

(Evaluation of characteristics of the second RFID tag)

The characteristics of the second RFID tag 200 shown in Fig. 14 were evaluated. A network analyzer (Agilent Technologies) was used for evaluating the characteristics. For comparison, the characteristics of the RFID tag 100 shown in Figs. 3 through 5 were also evaluated in the same manner.

The configuration of the RFID tag used for measurement is as follows:

(Second RFID tag 200)

The first loop 210A of the loop feeding element 210: an entire length (L20) (including a line width) of 43 mm in the X direction (see Fig. 14), an entire length (D20) (not including the line width) of 5.5 mm in the Y direction (see Fig. 14), a line width of 0.5 mm, a distance (W22) of 2 mm from an end face of the RFID tag 200 to the first loop 210A in the Y direction (see Fig. 14) ; and an additional line 210P (see Fig. 14) having the entire length (including a line width) of 43 mm in the X direction, a line width of 1 mm, and a distance (D22) of 2.5 mm between the boundary line 420 and the additional line 210P in the Y direction (see Fig. 14);
the second loop 210B of the loop feeding element 210: an entire length (including a line width) of 43 mm in the X direction (see Fig. 14), an entire length (D21) (not including the line width) of 1 mm in the Y direction (see Fig. 14), and a line width of 0.5 mm;
the insulating base material 215: 60 mm long in the X direction (see Fig. 14), 15 mm long in the Y direction (see Fig. 14), and 95 μm thick;
the artificial medium 220: the first conductive layer 225 (made from copper) having a length (L21) of 60 mm in the X direction (see Fig. 14), a length (W23) of 10 mm in the Y direction (see Fig. 14), and a thickness of 18 μm; a second conductive layer 235 (made from copper) having a length (L21) of 60 m in the X direction (see Fig. 14), a length (W21) of 15 mm in the Y direction (see Fig. 14), and a thickness of 18 μm; and a dielectric layer 230 having a length (L21) of 60 mm in the X direction (see Fig. 14), a length (W21) of 15 mm in the Y direction (see Fig. 14), a relative permittivity of 9.8, and a dielectric loss tanδ = 0.003.

(RFID tag 100)

The loop feeding element 110: an entire length (including a line width) of 44.25 mm in the X direction (see Fig. 3), an entire length (including a line width) of 3.6 mm in the Y direction (see Fig. 3), and a line width of 0.5 mm; the insulating base material 115: 57 mm long in the X direction (see Fig. 3), 15 mm long in the Y direction (see Fig. 3), a thickness of 95 μm;
the artificial medium 120: the first conductive layer 125 (made from copper) having a length of 57 mm in the X direction (see Fig. 3), a length of 10 mm in the Y direction (see Fig. 3), and a thickness of 18 μm; the second conductive layer 135 (made from copper) having a length of 57 mm in the X direction (see Fig. 3), a length of 15 mm in the Y direction (see Fig. 3), and a thickness of 18 μm; the dielectric layer 130 having a length of 57 mm in the X direction (see Fig. 3), a length of 15 mm in the Y direction (see Fig. 3), a relative permittivity of 9.8, a dielectric loss tanδ = 0.003; and the artificial medium 120 having an entire thickness of 0.635 mm.

Figs. 15A and 15B show measurement results on impedance of both RFID tags. Figs. 15A shows frequency dependence of a real part $Z_{real}$ of impedance, and
Fig. 15B shows frequency dependence of an imaginary part $Z_{imag}$ of impedance. In Figs. 15A and 15B, a broken line denotes a target impedance value determined by the IC chips 111 and 211.

The results show that each of the RFID tags obtains preferable impedance close to the target value around a frequency of 0.95 GHz. In particular, Fig. 15B shows that a frequency dependence of $Z_{imag}$; namely, a gradient of a curve, in proximity to 0.95 GHz of the second RFID tag 200 has become lower than a gradient of a curve acquired at the frequency of the RFID tag 100 and that the impedance of the second RFID tag 200 is closer to the target impedance.

Fig. 16 shows measurement results on S11 (a return loss) of both of the RFID tags. The results show that the frequency band of the second RFID tag 200, at which S11 assumes a value of -3 dB, has spread when compared with the frequency band of the RFID tag 100. The results also show that the second RFID tag 200 has been enhanced in connection with actual gain when compared with the RFID tag 100.

(Example modification of the second RFID tag 200)

The above descriptions have explained the improvements in the "actual gain" of the antenna by taking as an example the second RFID tag 200 equipped with the loop feeding element 210 made up of two mutually-coupled loops 201A and 210B, such as that shown in Fig. 14.

However, the configuration of the RFID tag whose "actual gain" is enhanced is not limited to that mentioned above.

For instance, in addition to having the coupled two loops, the loop feeding element of the RFID tag can also have another line. Alternatively, the loop feeding element can also have one loop and an additional line coupled to the loop so as to divide an internal region of the loop into at least two sub-regions. Even in the loop feeding element 210 shown in Fig. 14, attention must be paid to the fact that the line 210P equivalent to a coupling between the two loops can also be construed to be a kind of such additional line.

Fig. 17 shows another configuration of the RFID tag whose "actual gain" is enhanced.

An RFID tag 201 has substantially the same configuration as that of the RFID tag 200 shown in Fig. 14. Therefore, constituent members in Fig. 17 that are similar to those shown in Fig. 14 are assigned the same reference numerals as those used in Fig. 14. The insulating base material 215 equivalent to the insulating base material 115 shown in Figs. 3 through 5 is omitted even from Fig. 17 for the purpose of clarification.

However, contrasted with the RFID tag 200 shown in Fig. 14, the RFID tag 201 has a loop feeding element 210' that includes an additional line 210C in the first loop 210A in addition to having the two loops 210A and 210B. When the RFID tag 201 is viewed from above, the additional line 210C is arranged in the first loop 210A so as to extend across the boundary line 420 (particularly, in the illustrated embodiment, so as to extend in parallel with the Y direction).

Figs. 18A, 18B, and 19 show analysis results on the characteristics of the RFID tag 201 having the configuration shown in Fig. 17 in comparison with the results of the RFID tag 200 shown in Fig. 14. These results were obtained by use of the commercially-available electromagnetic field simulator.

In the simulator, a finite size is set solely for the metal layer, and all dielectric sections are handled as being infinite in the XY direction. Specifically, in both Figs. 17 and 14, the insulating base material 215 and the dielectric layer 230 are calculated as having infinite dimensions.

Parameter values provided below were used in simulation of the RFID tag 201.

The loop feeding element 210': an entire length (L26) (including a line width) of 49.25 mm in the X direction (see Fig. 17) and an entire length (W26) (including a line width) of 3.5 mm in the Y direction (see Fig. 14).

The first loop 210A of the loop feeding element 210': an entire length (L26) (including a line width) of 49.25 mm in the X direction (see Fig. 17), an entire length (D26) (not including the line width) of 3.5 mm in the Y direction (see Fig. 17), a line width of 0.5 mm (where the additional line 210P has a line width of 1.0 mm), a distance (D28) of 3.5 mm between the additional line 210P and the boundary line 420 in the Y direction (see Fig. 17);

the second loop 210B of the loop feeding element 210: an entire length (L26) (including a line width) of 49.25 mm in the X direction (see Fig. 17), an entire length (D27) (not including the line width) of 3 mm in the Y direction (see Fig. 17), and a line width of 0.5 mm;

the additional line 210C of the loop feeding element 210': a line width of 0.75 mm and an entire length (D26) of 3.5 mm in the Y direction (see Fig. 17);

the insulating base material 215: a thickness of 95 $\mu$m, a relative permittivity of 3.4, and a dielectric loss tan$\delta$ = 0.1;

the artificial medium 220: the first conductive layer 225 (made from copper) having a length (L27) of 60 mm in the X direction (see Fig. 17), a length (W28) of 10 mm in the Y direction (see Fig. 17), a thickness of 18 $\mu$m; the second conductive layer 235 (made from copper) having a length (L27) of 60 m in the X direction (see Fig. 17), a length (W27) of 15 mm in the Y direction (see Fig. 17), and a thickness of 18 $\mu$m; and the dielectric layer 230 having a thickness of 0.635 mm, a relative permittivity of 9.8, and a dielectric loss tan$\delta$ = 0.003.

In the meantime, similar parameter values were used even at the time of simulation of the RFID tag 200. However, the additional line 210C does not exist in the RFID tag 200.

Figs. 18A and 18B show analysis results on impedance of both the RFID tags 200 and 201. Fig. 18A shows frequency dependence of the real part $Z_{real}$ of impedance, and Fig. 18B shows frequency dependence of the imaginary part $Z_{imag}$ of the impedance. In Figs. 18A and 18B, broken lines denote a target impedance value determined by the IC chip 211.

The results shown in Figs. 18A and 18B show that each of the RFID tags 201 having the additional line 210C exhibits an impedance characteristic that is equal to or greater than that of the RFID tag 200. In particular, Fig. 18A shows that the real part $Z_{real}$ of impedance in the neighborhood of the frequency of 0.95 GHz in the RFID tag 201 is closer to the target value than the real part of impedance exhibited by the RFID tag 200.

Fig. 19 shows analysis results on S11 (a return loss) of both of the RFID tags 200 and 201. The results show that the frequency band of the RFID tag 201 at which there is achieved S11 of -3 dB has spread larger than that exhibited by the RFID tag 200. The results also show that, when compared with the RFID tag 100, the RFID tag 201 has also achieved an improved actual gain that is equal to or larger than that yielded by the RFID tag 200.

As mentioned above, when the loop feeding element has one loop and an additional line coupled to the loop so as to divide an interior region of the loop into at least two sub-regions, the RFID tag of the present invention can acquire an improved actual gain than that acquired by the RFID tag having the loop feeding element with a single loop.

(Third configuration of the RFID tag of the present invention)

A third configuration of the RFID tag of the present invention (hereinbelow referred to as a "third RFID tag") is now described by reference to the drawings.

Fig. 20 shows an example schematic top view of the third RFID tag.

As shown in Fig. 20, the third RFID tag 300 basically has a configuration similar to that of the RFID tag 100 shown in Figs. 3 to 5. Accordingly, constituent elements shown in Fig. 20 similar to those shown in Figs. 3 to 5 are assigned three-digit reference numerals made by prefixing each of the reference numerals shown in Figs. 3 to 5 with 200. (An insulating base material 315 equivalent to the insulating base material 115 shown in Figs. 3 and 5, incidentally, is omitted from Fig. 20 for the purpose of clarification).

However, contrasted with the RFID tag 100 shown in Figs. 3 to 5, the RFID tag 300 has an IC chip 311 that is placed at a position deviating from the center of the entire length of a loop feeding element 310 in the X direction. Specifically, when the RFID tag 300 is viewed from above, the IC chip 311 is placed so as to be coupled to a line 310L of the loop feeding element 310 extending in parallel to the boundary line 420 at a position above a dielectric layer 330 of an artificial medium 320. However, the position where the IC chip 311 is placed deviates from a center 310C of the entire length of the line 310L.

No limitations are specifically imposed on the position where the IC chip 311 is coupled to the line 310L of the loop feeding element 310, as long as the position deviates from the center 310C. For instance, the IC chip 311 can also be placed at a corner 380 of the loop feeding element 310.

In the case of a configuration, like that of the third RFID tag 300; namely, when the IC chip 311 is placed while deviating from the center 310C of the entire length of the line 310L of the loop feeding element 310, the operating frequency of the RFID tag can be realized as a dual band as will be described below. An operating frequency achieved at this time can be controlled by means of a shape of a conductive layer making up the artificial medium; particularly, a longitudinal length and a lateral length of the conductive layer when the conductive layer has a square shape, the relative permittivity of the dielectric layer, and the like, and the operating frequency can be provided with a wider band by bringing the two operating frequency further closer to each other.

(Actual gain of the third RFID tag)

Analysis results on an actual gain of the third RFID tag 300 will now be described. The electromagnetic simulator was used for analysis.

Parameter values provided below were used for analysis.

The loop feeding element 310: an entire length (L30) (including a line width) of 14 mm in the X direction (see Fig. 20), an entire length (D30) (not including a line width) of 14 mm in the Y direction (see Fig. 20), a line width of 0.5 mm, and a distance (D32) of 2.5 mm existing between the boundary line 420 and the line 310L in the Y direction (see Fig. 20);
the insulating base material 315: thickness of 95 $\mu$m, a relative permittivity of 3.4, and a dielectric loss tan$\delta$ = 0.1;
a position where the IC chip 311 is arranged: the corner 380 of the loop feeding element 310 (see Fig. 20);
the artificial medium 320: a first conductive layer 325 (made from copper) having a length (L31) of 54 mm in the X direction (see Fig. 20), a length (W33) of 52 mm in the Y direction (see Fig. 20), and a thickness of 18 $\mu$m; a second conductive layer 335 (made from copper) having a length (L31) of 54 mm in the X direction (see Fig. 20), a length (W31) of 52 mm in the Y direction (see Fig. 20), and a thickness of 18 $\mu$m; the dielectric layer 330 having a thickness of 0.635 mm, a relative permittivity of 9.8, and a dielectric loss tan$\delta$ = 0.003.

Fig. 21 shows analysis results on an actual gain of the third RFID tag 300. Fig. 21 concurrently shows the RFID tag 100 having the configuration shown in Figs. 3 to 5 for comparison purpose; in other words, a result on the configuration where the IC chip 111 is arranged at a "center" of the entire length of the loop feeding element 110 in the X direction.

The results show that the frequency band where the actual gain falls from the peak value by -3 dB significantly spread in the third RFID tag 300 than in the RFID tag 100.

The IC chip 311 is arranged as mentioned above so as to deviate from the center 310C of the entire length of the line 310L of the loop feeding element 310, thereby making it possible to make the operating frequency of the RFID tag into a dual band. Therefore, the operating frequency of the RFID tag can be made into a much wider band.

(Example modification of the third RFID tag)

An example modification of the third RFID tag is now described by reference to the drawings. Fig. 22 is a schematic top view of the example modification of the third RFID tag of the present invention. Fig. 23 is a cross sectional view of the RFID tag shown in Fig. 22 taken along line A-A. As shown in Fig. 22, the example modification of the third RFID tag is made up of a double loop feeding element.

Adopting such a configuration results in yielding of an advantage that the bandwidth can be made wider than a bandwidth of a single loop antenna. It is thereby possible to implement; for instance, an RFID tag that covers all frequency bands (about 860 MHz to 960 MHz) used for current UHF band RFIDs all over the word.

(Evaluation of characteristics of an example modification of the third RFID tag)

Characteristics of the example modification of the third RFID tag shown in Fig. 22 were analyzed by use of the electromagnetic simulator. A configuration of the RFID tag used in analysis is as follows:

In order to determine an actual gain of the example modification of the third RFID tag, the following parameters were used. As shown in Fig. 22, sizes of the respective constituent elements are as follows. L2710 is 100 mm; L2720 is 27 mm; L2730 is 3.5 mm; W2740 is 92 mm; W2750 is 2 mm; W2760 is 3 mm; W2770 is 1.75 mm; W2780 is 0.75 mm;

and W2790 is 0.5 mm. Further, as shown in Fig. 23, a thickness and relative permittivity of each of the constituent elements are as follows. The dielectric layer 330 has a thickness of 1 mm; a relative permittivity of 2.9; and tanδ of 0.001. The insulating base material 315 has a thickness of 0.095 mm, a relative permittivity of 3.15, and tanδ of 0.1. The loop feeding element 310, the first conductive layer 325, and the second conductive layer 335 each have a thickness of 0.018 mm.

Analysis results on the actual gain of an example modification of the third RFID tag are described below by use of the parameters. Fig. 24 is a graph showing obtained analysis results on S11 (a return loss) of the example modification of the third RFID tag of the present invention.

The results show that the example modification of the third RFID tag makes it possible to convert the operating frequency of the RFID tag into a dual band and make the operating frequencies of the RFID tag into a much wider band by bringing the respective operating frequencies close to each other.

(Fourth configuration of the RFID tag of the present invention)

A fourth configuration of the RFID tag of the present invention (hereinafter called a "fourth RFID tag") is now described by reference to the following drawings.

Fig. 25 is a schematic top view of an example fourth RFID tag of the present invention.

As shown in Fig. 25, a fourth RFID tag 500 basically has a configuration similar to that of the RFID tag 100 shown in Figs. 3 to 5. Accordingly, constituent members shown in Fig. 25 that are similar to their counterparts shown in Figs. 3 to 5 are assigned three-digit reference numerals made by prefixing each of the reference numerals shown in Figs. 3 to 5 with 400. (An insulating base material 515 equivalent to the insulating base material 115 shown in Figs. 3 and 5, incidentally, is omitted from Fig. 25 for the purpose of clarification).
However, the RFID tag 500 is different from the the RFID tag 100 shown in Figs. 3 to 5 in terms of a configuration of an artificial medium 520. Specifically, the fourth RFID tag 500 is characterized in that a first conductive layer 525 of the artificial medium 520 is omitted from a pair of diagonally-aligned corners 526A and 526B.

Such a fourth RFID tag 500 can be operated as a circularly polarized antenna as below.

(Actual gain of the fourth RFID tag)

Analysis results on actual gain of the fourth RFID tag 500 are now described. The electromagnetic simulator was used for analysis.

Parameter values provided below were used for analysis.

A loop feeding element 510: an entire length (L50) (including a line width) of 14 mm in the X direction (see Fig. 25), an entire length (D50) (not including a line width) of 14 mm in the Y direction (see Fig. 25), a line width of 0.5 mm, and a distance (D51) of 2.5 mm existing between the boundary line 420 and the loop feeding element 510 on an end face side in the Y direction (see Fig. 25);
the insulating base material 515: thickness of 95 μm, a relative permittivity of 3.4, and a dielectric loss tanδ = 0.1;
a position where an IC chip 511 is arranged: a corner 519 of the loop feeding element 510 (see Fig. 25);
the artificial medium 520: the first conductive layer 525 (made from copper) having a length (L51) of 52 mm (a pair of diagonally aligned cutouts (W56 = W58 = 3 mm)) in the X direction (see Fig. 25), a length (W53) of 52 mm (a pair of diagonally aligned cutouts (W55 = W57 = 3 mm)) in the Y direction (see Fig. 25), and a thickness of 18 μm; the second conductive layer 535 (made from copper) having a length (L51) of 52 mm in the X direction (see Fig. 25), a length (W50) of 66 mm in the Y direction (see Fig. 25), and a thickness of 18 μm; the dielectric layer 530 having a thickness of 0.635 mm, a relative permittivity of 9.8, and a dielectric loss tanδ = 0.003.

Fig. 26 shows analysis results on an actual gain of the fourth RFID tag 500.

The results show that, in the fourth RFID tag 500, an actual gain of a right-handed circularly polarized wave in a neighborhood of a frequency of 0.95 GHz has become significantly greater than that of a left-handed circularly polarized wave. This means that, in the fourth RFID tag 500, the right-handed circularly polarized wave becomes dominant in the neighborhood of a frequency of 0.95 GHz. As mentioned above, a pair of cutouts are provided along a diagonal line on the first conductive layer of the artificial medium, thereby enabling the RFID tag to exhibit an excellent circularly polarized wave characteristic.

In the above example, the fourth RFID tag is formed by eliminating the pair of diagonally-aligned corners 526A and 526B from the first conductive layer 525 of the artificial medium 520. However, the configuration of the RFID tag intended for exhibiting the circularly polarized characteristic is not limited to the example. For instance, projections can also be provided at the respective corners 526A and 526B in place of removal of the pair of diagonally-aligned corners 526A and 526B from the first conductive layer 525 in the fourth RFID tag 500. Even in this case, it is possible to let the RFID tag exhibit a circularly polarized wave characteristic.

(Fifth configuration of the RFID tag of the present invention)

The descriptions have provided explanations on the premise that the RFID tag is put on the metal mount target 160 on the occasion of use of the RFID tag. The RFID tag can also be operated even on a nonmetal target of placement as well as on a metal target of placement.

However, there is a possibility that a nominal change will occur in communication performance on this occasion. A change in performance induced by such a target of attachment may cause variations in reading tags during actual operation of an RFID system, which may consequently yield a worse read rate. For these reasons, even when the RFID tag is put on the nonmetal placement target, convenience of the RFID tag will be enhanced and significant so long as there is acquired a characteristic similar to that acquired when the RFID tag is put on the metal target of placement 160. Accordingly, a configuration of such an RFID tag (a fifth RFID tag) is hereunder described.

Fig. 27 is a schematic top view of an example configuration of a fifth RFID tag 600. Fig. 28 is a schematic cross sectional view of the fifth RFID tag 600 taken along line B-B shown in Fig. 27.

As shown in Figs. 27 and 28, the fifth RFID tag 600 basically has a configuration similar to that of the RFID tag 100 shown in Figs. 3 to 5. Accordingly, constituent members shown in Figs. 27 and 28 that are similar to those shown in Figs. 3 to 5 are assigned three-digit reference numerals made by prefixing each of the reference numerals shown in Figs. 3 to 5 with 500. (An insulating base material 615 equivalent to the insulating base material 115 shown in Figs. 3 to 5, incidentally, is omitted from Fig. 27 for the purpose of clarification).

However, the RFID tag 600 is different from the RFID tag 100 shown in Figs. 3 to 5 in terms of a configuration of an artificial medium 620. Specifically, the fifth RFID tag 600 is characterized in that a first conductive layer 625 of the artificial medium 620 becomes narrower than other layers 630 and 635 in the Y direction in terms of a width of both ends.

Put another word, as shown in Figs. 27 and 28, an upper surface of the dielectric layer 630 of the artificial medium 620 in the RFID tag 600 has the first region 400, the second region 410 adjoining to the first region 400 in the Y direction, and a third region 440 adjoining to the first region 400 in the Y direction. The third region 440 is put on the other side of the second region 410 with the first region 400 sandwiched therebetween. Further, the first conductive layer 625 is formed solely over the upper surface of the first region 400 of the dielectric layer 630. In the meantime, the first conductive layer 625 is not formed over an upper surface of the second region 410 or an upper surface of the third region 440 of the dielectric layer 630, so that an upper surface of the dielectric layer 630 becomes exposed. In Figs. 27 and 28, the boundary line 420 shows a virtual border between the first region 400 and the second region 410, and a boundary line 423 shows a virtual border between the first region 400 and the third region 440. In Figs. 27 and 28, the first region 400, the second region 410, and the third region 440 each assume a rectangular shape. Needless to say, however, these regions are not restricted to such a shape. On the other hand, the second conductive layer 635 is laid over an entire bottom surface of the dielectric layer 630 in the Y direction in Figs. 27 and 28. It is desirable that the second conductive layer 635 should cover an entire area obtained when a loop feeding element 610 is projected on the second conductive layer 635. Even when the RFID tag is put on a nonmetal substance having any dielectric constant, the configuration makes it possible to obviate influence on the RFID tag, which would otherwise be exerted by the target of placement, and make communication performance stable.

By means of the configuration of such an RFID tag 600, a substantially same characteristic can be yielded in both when the RFID tag 600 is put on a nonmetal target of placement and when the RFID tag is put on a metal target of placement. Accordingly, the configuration of such an RFID tag 600 results in lessening restrictions which would be imposed on the target of placement of the RFID tag, thereby enhancing convenience of the RFID tag.

(Characteristic of the fifth RFID tag)

Analysis results on S11 (a return loss) of the fifth RFID tag 600 are hereunder described.

Parameter values provided below were used for analysis.

The loop feeding element 610: an entire length (L60) (including a line width) of 34.6 mm in the X direction (see Fig. 27), an entire length (D61) (not including a line width) of 4.5 mm in the Y direction (see Fig. 27), and a line width of 0.05 mm; the region 410 having a length of 5 mm in the Y direction (Fig. 27), the region 400 having a length of 10 mm in the Y direction (Fig. 27), and the region 440 having a length of 3.5 mm in the Y direction (Fig. 27); and a distance (D62) of 2.5 mm existing between the boundary line 420 and the loop feeding element 610 aligned in parallel to the X direction on the region 410;

the insulating base material 615: a length of 59 mm in the X direction (see Fig. 27); a length of 20 mm in the Y direction (see Fig. 27), a thickness of 95 $\mu$m, a relative permittivity of 3.4, and a dielectric loss tan$\delta$ = 0.1;

and the artificial medium 620: the first conductive layer 625 (made from copper) having a length (L61) of 59 mm in the X direction (see Fig. 27), a thickness of 18 $\mu$m; the second conductive layer 635 (made from copper) having a length (L61) of 59 mm in the X direction (see Fig. 27), a length (W60) of 20 mm in the Y direction (see Fig. 27), and a thickness of 18 $\mu$m; the dielectric layer 630 having a thickness of 0.635 mm, a relative permittivity of 9.8, and a dielectric loss tan$\delta$

= 0.003.

Fig. 29 shows analysis results on S11 (a return loss) of the fifth RFID tag 600. In the drawing, a bold line shows a result achieved when the RFID tag 600 is put on a metal target, and a narrow line shows a result achieved when the RFID tag 600 is put on a nonmetal target (free space).

The results show that the fifth RFID tag 600 causes little change in S11 (a return loss) regardless of whether the RFID tag 600 is placed on a metal target or a nonmetal target.

As mentioned above, it is seen that any configuration, like the configuration of the RFID tag 600, leads to a smaller amount of restrictions to be imposed on the target where the RFID tag is to be placed, which will enhance convenience of the RFID tag.

(Sixth configuration of the RFID tag of the present invention)

A sixth RFID tag is now described by reference to the drawings.

Fig. 30 is a schematic top view of the sixth RFID tag of the present invention. Fig. 31 is a schematic cross-sectional view of the sixth RFID tag 601 taken along line B-B shown in Fig. 30.

As shown in Figs. 30 and 31, the sixth RFID tag 601 basically has a configuration similar to that of the RFID tag 600 shown in Figs. 27 and 28. Accordingly, constituent members shown in Figs. 30 and 31 similar to their counterparts shown in Figs. 27 and 28 are assigned the same reference numerals as those provided in Figs. 27 and 28 (the insulating base material 615, incidentally, is omitted from Fig. 30 for the purpose of clarification).
However, contrasted with the RFID tag 600 shown in Figs. 27 and 28, the RFID tag 601 is characterized in that the loop feeding element 610 has a line 610P. The line 610P extends in parallel to the X direction and partitions a region enclosed with the loop feeding element 610 into two sub-regions. When the RFID tag 601 is viewed from above, the line 610P is laid so as to fall within a region of the first conductive layer 625 of the artificial medium 620.

More specifically, as shown in Figs. 30 and 31, the RFID tag 601 has the first region 400, the second region 410 adjoining to the first region 400 in the Y direction, and the third region 440 adjoining to the first region 400 in the Y direction, all of which are on an upper surface of the dielectric layer 630 of the artificial medium 620. The third region 440 is placed on the other side of the second region 410 with the first region 400 sandwiched therebetween. The first conductive layer 625 is formed only on the upper surface of the first region 400 of the dielectric layer 630. In the meantime, the first conductive layer 625 is not formed over an upper surface of the second region 410 or an upper surface of the third region 440 of the dielectric layer 630, and the upper surface of the dielectric layer 630 is exposed. In Figs. 30 and 31, the boundary line 420 represents a virtual border between the first region 400 and the second region 410, and the boundary line 423 shows a virtual border between the first region 400 and the third region 440. In Figs. 30 and 31, the first region 400, the second region 410, and the third region 440 each assume a rectangular shape. Needless to say, however, these regions are not restricted to such a shape. On the other hand, the second conductive layer 635 is laid over the entire bottom surface of the dielectric layer 630 in the Y direction in Figs. 30 and 31. It is desirable that the second conductive layer 635 should cover an entire area obtained when the loop feeding element 610 is projected on the second conductive layer 635.

(Evaluation of characteristics of an example modification of the sixth RFID tag)

Characteristics of the sixth RFID tag shown in Figs. 30 and 31 were analyzed by use of the electromagnetic simulator.

Parameter values provided below were used for analysis.

The loop feeding element 610: an entire length (L60) (including a line width) of 53.5 mm in the X direction (see Fig. 30), an entire length (D61) (not including a line width) of 8.5 mm in the Y direction (see Fig. 30), and a line width of 0.5 mm, the region 410 having a length of 5 mm in the Y direction (Fig. 30), the region 400 having a length of 50 mm in the same direction, the region 440 having a length of 5 mm in the same direction; a distance (D62) of 1.5 mm existing between the boundary line 420 and the loop feeding element 610 on the region 410 in parallel to the X direction, the line 610P having a width of 1.0 mm, and a distance (D66) (not including a line width) of 1 mm existing between the line 610P and the loop feeding element 610 on the first region 400 in the Y direction (see Fig. 30);
the insulating base material 615: a length of 108 mm in the X direction (see Fig. 30), a length of 60 mm in the Y direction (see Fig. 30), a thickness of 95 $\mu$m, a relative permittivity of 3.15, and a dielectric loss tan$\delta$ = 0.1;
the artificial medium 620: the first conductive layer 625 (made from copper) having a length (L61) of 108 mm in the X direction (see Fig. 30), and a thickness of 18 $\mu$m; the second conductive layer 635 (made from copper) having a length (L61) of 108 mm in the X direction (see Fig. 30), a length (W60) of 60 mm in the Y direction (see Fig. 30), and a thickness of 18 $\mu$m; the dielectric layer 630 having a thickness of 0.254 mm, a relative permittivity of 2.17, and a dielectric loss tan$\delta$ = 0.00085.

Analysis results on directivity achieved when the sixth RFID tag is put in a free space are provided below by use of the parameters. Figs. 32A and 32B show an excerpted part of angle characteristics of a horizontal component (an X component) of electric fields developing in both XY and YZ planes among three-dimensional directivity analysis results acquired through calculation of the sixth RFID tag. In relation to angles of graphs shown in Figs. 32A and 32B, the Z direction in Fig. 30 is taken as a front direction (0°). Further, in Fig. 30, a direction achieved after the RFID tag is turned counterclockwise so as to make the Z axis overlap the X axis is taken as a positive side, and a direction achieved after the RFID tag is turned clockwise is taken as a negative side. The same also applies to an XZ plane. As shown in Figs. 32A and 32B, a gain difference does not exist between a 0-degree direction (a positive direction along the Z axis) and ±180-degree directions in the sixth RFID tag. Specifically, when the RFID tag is attached to a nonmetallic target, the configuration makes it possible to read the tag from its back as well as from its front, so that convenience of the RFID tag is further enhanced.

In addition to broadening the antenna bandwidth, the configuration makes it possible to maintain a constant impedance characteristic regardless of whether the RFID tag is put on a metal or a nonmetal. In particular, when the RFID tag is put on a nonmetallic target, there is yielded an advantage of the ability to read the tag from both sides of the nonmetallic target.

(Seventh configuration of the RFID tag of the present invention)

A seventh RFID tag is now described by reference to the drawings.

Fig. 33 is a schematic top view of the seventh RFID tag of the present invention, and Fig. 34 is a schematic cross sectional view of the seventh RFID tag 700 taken along line C-C shown in Fig. 30.

As shown in Figs. 33 and 34, the seventh RFID tag 700 basically has a configuration similar to that of the RFID tag 200 shown in Fig. 14. Accordingly, constituent elements shown in Figs. 33 and 34 similar to those shown in Fig. 14 are assigned three-digit reference numerals made by prefixing each of the reference numerals shown in Fig. 14 with 500. (An insulating base material 715, incidentally, is omitted from Fig. 33 for the purpose of clarification). However, contrasted with the RFID tag 200 shown in Fig. 14, the RFID tag 700 is characterized in that both ends of a first conductive layer 725 of an artificial medium 720 achieved along the X direction are shorter than both ends of each of a second conductive layer 735 and a dielectric layer 730.

More specifically, as shown in Figs. 33 and 34, an upper surface of the dielectric layer 730 of the artificial medium 720 has a first region 800 and a second region 810 adjoining to the first region 800 in the Y direction. Further, as shown in Fig. 33, a third region 840 and a fourth region 850, which adjoin to the first region 800 in the X direction, are provided on an upper surface of the dielectric layer 730. The third region 840 is placed on the other side of the fourth region 850 with the first region 800 sandwiched therebetween. Further, the third region 840 and the fourth region 850 adjoin to the second region 810 in the Y direction.

The first conductive layer 725 is formed only over an upper surface of the first region 800 of the dielectric layer 730. In the meantime, the first conductive layer 725 is not formed over an upper surface of the second region 810, an upper surface of the third region 840, or an upper surface of the fourth region 850 of the dielectric layer 730, and an upper surface of the dielectric layer 730 is exposed. In Figs. 33 and 34, the boundary line 420 represents a virtual border between the first region 800 and the second region 810, and a boundary line 820 shows a virtual border between the first region 800 and the third region 840. A boundary line 823 shows a virtual border between the first region 800 and the fourth region 850.

In Figs. 33 and 34, the first region 800, the second region 810, the third region 840, and the fourth region 850 each assume a rectangular shape. Needless to say, however, these regions are not restricted to such a shape. On the other hand, the second conductive layer 735 is laid over the entire bottom surface of the dielectric layer 730. It is desirable that the second conductive layer 735 should cover an entire area obtained when a loop feeding element 710 is projected on the second conductive layer 735.

(Evaluation of characteristics of the seventh RFID tag)

Characteristics of the seventh RFID tag shown in Figs. 33 and 34 were analyzed by use of the electromagnetic simulator.

Parameter values provided below were used for analysis.

The loop feeding element 710: an entire length (L61) (including a line width) of 53.5 mm in the X direction (see Fig. 33), an entire length (D61) (not including a line width) of 8.5 mm in the Y direction (see Fig. 33), a line width of 0. 5 mm; the region 810 having a length of 5 mm in the Y direction (Fig. 33) and the region 800 having a length of 50 mm in the same direction; a distance (D62) of 1.5 mm existing between the boundary line 420 and the loop feeding element 710 on the region 810 in parallel to the X direction; a line 710P having a width of 1.0 mm; and a distance (D66) (not including a line width) of 1 mm existing between the line 710P and the loop feeding element 710 on the first region 800 in the Y direction (see Fig. 33);

the insulating base material 715: a length of 108 mm in the X direction (see Fig. 33), a length of 55 m in the Y direction (see Fig. 33), a thickness of 95 $\mu$m, a relative permittivity of 3.15, and a dielectric loss tan$\delta$ = 0.1;
the artificial medium 720: the first conductive layer 725 (made from copper) having a length of 50 mm in the Y direction (see Fig. 33), and a thickness of 18 $\mu$m; the second conductive layer 735 (made from copper) having a length (L60) of 108 mm in the X direction (see Fig. 33), a length (W60) of 55 mm in the Y direction (see Fig. 33), and a thickness of 18 $\mu$m; the dielectric layer 730 having a thickness of 0.254 mm, a relative permittivity of 2.17, and a dielectric loss tan$\delta$ = 0.00085.

Provided that a width (L70) of the third region 840 in the X direction and a width (L71) of the fourth region 850 in the X direction are equal to each other, radiation directivity of the seventh RFID tag was evaluated by use of the parameters while L70 and L71 were changed from 0 mm to 10 mm.

Figs. 35A and 35B show results.

Figs. 35A and 35B are graphs showing angle characteristics of directivity gains acquired within an XZ plane and the YZ plane of the seventh RFID tag. As shown in Figs. 35A and 35B, the seventh RFID tag can be understood to be able to control directivity within the XZ plane and the YZ plane according to the lengths L70 and L71. It is also understood that sensitivity achieved in directions of $\pm$180°, in particular, can be controlled.

Fig. 36 shows a relationship between an F/B (front-back) ratio of 0° to $\pm$180° achieved within the XY plane of the seventh RFID tag and the length L70 (L71). The F/B (front-back) ratio refers to a difference between radiant intensity achieved in a front direction and radiant intensity achieved in a back direction. As shown in Fig. 36, when the width of L70 (L71) is 3 mm or less, the F/B ratio is understood to be eliminated gradually.

As shown in Figs. 35A and 35B, a null occurring in $\pm$90° directions within the XY plane and the YZ plane can be eliminated by changing L70 (L71), whereby a reading angle range can be broadened.

It is also seen that adopting such a configuration makes it possible to control radiant directivity as well as to broaden the antenna bandwidth. In short, lengths of two conductors making up the artificial medium are changed in a direction where an electric current flows at a resonance frequency; namely, a direction in which an electric field develops. There is thereby yielded an advantage of directivity control for enhancing radiant intensity in a specific direction or broadening the reading angle by eliminating a null in an azimuth angle or an elevation angle.

The third configuration can also yield a similar advantage. In this case, an electric current flows in both longitudinal and lateral directions of the artificial medium. For this reason, a difference between a lateral length and a longitudinal length of each of two conductors making up the artificial medium affects directivity at respective resonance frequencies of the conductors.

In the present configuration, the conductive layer closer to the loop feeding element is made shorter. Conversely, the conductive layer closer to the loop feeding element can also be made longer. Radiant intensity of an attachment target can be made stronger, so long as the attachment target is a nonmetal. Hence, this configuration can be said to be preferable in a case where the RFID tag is recognized over the attachment target.

(Eighth configuration of the RFID tag of the present invention)

An eighth RFID tag is now described by reference to the drawings.

Fig. 37 is a schematic top view of the eighth RFID tag of the present invention, and Fig. 38 is a schematic cross-sectional view of the eighth RFID tag 900 taken along line D-D shown in Fig. 37.

As shown in Figs. 37 and 38, the eighth RFID tag 900 basically has a configuration similar to that of the RFID tag 700 shown in Figs. 33 and 34. Accordingly, constituent elements shown in Figs. 37 and 38 similar to those shown in Figs. 33 and 34 are assigned four-digit reference numerals made by prefixing each of the reference numerals shown in Figs. 33 and 34 with 200. (An insulating base material 915, incidentally, is omitted from Fig. 37 for the purpose of clarification).
However, contrasted with the RFID tag 700 shown in Figs. 33 and 34, the RFID tag 900 is characterized in that both ends of a first conductive layer 925 of an artificial medium 920 achieved along the Y direction are shorter in width than both ends of each of other layers 930 and 935.

More specifically, as shown in Figs. 37 and 38, an upper surface of the dielectric layer 930 of the artificial medium 925 has a first region 1000, and a second region 1010 and a third region 1015 that adjoin to the first region 1000 in the Y direction.

As shown in Fig. 37, the upper surface of the dielectric layer 930 additionally has a fourth region 1040 and a fifth region 1050 that adjoin to the first region 1000 in the X direction. The fourth region 1040 is placed on the other side of the fifth region 1050 with the first region 1000 sandwiched therebetween. Further, the fourth region 1040 and the fifth region 1050 adjoin to the second region 1010 and the third region 1015 in the Y direction.

The first conductive layer 925 is formed only over the upper surface of the first region 1000 of the dielectric layer 930. In the meantime, the first conductive layer 925 is not formed over an upper surface of the second region 1010, an upper surface of the third region 1015, an upper surface of the fourth region 1040, and an upper surface of the fifth region 1050 of the dielectric layer 930, and an upper surface of the dielectric layer 930 is exposed. In Figs. 37 and 38, the boundary line 420 represents a virtual border between the first region 1000 and the second region 1010, and the boundary line 423 shows a virtual border between the first region 1000 and the third region 1015. A boundary line 1020 shows a virtual border between the first region 1000 and the fourth region 1040, and a boundary line 1023 shows a virtual border between the first region 1000 and the fifth region 1050.

In Figs. 37 and 38, the first region 1000, the second region 1010, the third region 1015, the fourth region 1040, and the fifth region 1050 each assume a rectangular shape. Needless to say, however, these regions are not restricted to such a shape. On the other hand, the second conductive layer 935 is laid over an entire bottom surface of the dielectric layer 930. It is desirable that the second conductive layer 935 should cover an entire area obtained when a loop feeding element 910 is projected on the second conductive layer 935.

(Evaluation of characteristics of the eighth RFID tag)

Characteristics of the eighth RFID tag shown in Figs. 37 and 38 were analyzed by use of the electromagnetic simulator.

Parameter values provided below were used for analysis.

The loop feeding element 910: an entire length (L61) (including a line width) of 53.5 mm in the X direction (see Fig. 37), an entire length (D61) (not including a line width) of 8.5 mm in the Y direction (see Fig. 37), a line width of 0.5 mm; the region 1010 having a length of 5 mm in the Y direction (Fig. 37), the region 1000 having a length of 50 mm in the same direction, and the region 1015 having a length of 5 mm in the same direction; and a distance (D62) of 1.5 mm existing between the boundary line 420 and the loop feeding element 910 on the region 1010 in parallel to the X direction; a line 910P having a width of 1.0 mm; a distance (D66) (not including a line width) of 1 mm existing between the line 910P and the loop feeding element 910 on the first region 1000 in the Y direction (see Fig. 37);
the insulating base material 915: a length (L60) of 118 mm in the X direction (see Fig. 37), a length (W60) of 60 mm in the Y direction (see Fig. 37), a thickness of 95 $\mu$m, a relative permittivity of 3.15, and a dielectric loss tan$\delta$ = 0.1;
the artificial medium 920: the first conductive layer 925 (made from copper) having a length of 50 mm in the Y direction (see Fig. 37), and a thickness of 18 $\mu$m; the second conductive layer 935 (made from copper) having a length (L60) of 118 mm in the X direction (see Fig. 37), a length (W60) of 60 mm in the Y direction (see Fig. 37), and a thickness of 18 $\mu$m; the region 1040 having a length of 5 mm in the X direction (see Fig. 37) of the dielectric layer 930, the region 1000 having a length of 108 mm in the same direction of the dielectric layer 930, and the region 1050 having a length of 5 mm in the same direction of the dielectric layer 930; and the dielectric layer 930 having a thickness of 0.254 mm, a relative permittivity of 2.17, and a dielectric loss tan$\delta$ = 0.00085.

Directivity gains achieved in both XZ and YZ planes of the eighth RFID tag 900 were evaluated by use of the parameters.

Figs. 39A and 39B show results.

Figs. 39A and 39B are graphs showing analysis results on directivity gains acquired within the XZ and YZ planes of the eighth RFID tag. As shown in Figs. 39A and 39B, it is understood that a null appears in the XZ plane of the eighth RFID tag and that directivity achieved within the YZ plane exhibits a wide angle in the front direction.

As a result of adoption of such a configuration, there is yielded an advantage of the ability to maintain a constant impedance characteristic regardless of whether the RFID tag is placed on a metal or a nonmetal and enhance a gain in the front direction to thereby send a radio wave to a much greater distance in addition to yielding an advantage of the ability to broaden the antenna bandwidth.

Although the present patent application has been described in detail by reference to the specific embodiments, it is manifest to those who are skilled in the art that the present invention be susceptible to various alterations and modifications without departing the spirit and scope of the present invention.
The present patent application is based on Japanese Patent Applications (JP-2009-292898) filed on December 24, 2009 and (JP-2010-231940) filed on October 14, 2010, specifics of which are incorporated herein by reference in its entirety.

INDUSTRIAL APPLICABILITY

The present invention can be utilized for an RFID tag, or the like, using RFID techniques.

DESCRIPTION OF REFERENCE NUMERALS

1 PATCH ANTENNA
10 SUBSTRATE

20 FIRST CONDUCTIVE PATCH
25 SECOND CONDUCTIVE PATCH
30 IMPEDANCE MATCHING GROUP
35 CHIP
100, 101 RFID TAG OF THE INVENTION
110, 110' LOOP FEEDING ELEMENT
111 IC CHIP
115 INSULATING BASE MATERIAL
120 ARTIFICIAL MEDIUM
125 FIRST CONDUCTIVE LAYER
126 EDGE PORTION OF FIRST CONDUCTIVE LAYER
130 DIELECTRIC LAYER
135 SECOND CONDUCIVE LAYER
150 ANOTHER DIELECTRIC SUBSTANCE
160 MOUNT TARGET
200, 201 SECOND RFID TAG
210, 210' LOOP FEEDING ELEMENT
210A FIRST LOOP
210B SECOND LOOP
210C ADDITIONAL LINE
210P ADDITIONAL LINE
220 ARTIFICIAL MEDIUM
225 FIRST CONDUCTIVE LAYER
230 DIELECTRIC LAYER
300 THIRD RFID TAG
310 LOOP FEEDING ELEMENT
310C CENTER OF ENTIRE LENGTH
310L LINE
311 IC CHIP
315 INSULATING BASE MATERIAL
325 FIRST CONDUCTIVE LAYER
330 DIELECTRIC LAYER
335 SECOND CONDUCTIVE LAYER
380 CORNER
400 FIRST REGION
410 SECOND REGION
420, 421, 423 VIRTUAL BOUNDARY LINE
430 CLOSED REGION
440 THIRD REGION
500 FOURTH RFID TAG
510 LOOP FEEDING ELEMENT
520 ARTIFICIAL MEDIUM
525 FIRST CONDUCTIVE LAYER
526A, 526B A PAIR OF CORNERS
530 DIELECTRIC LAYER
600 FIFTH RFID TAG
610 LOOP FEEDING ELEMENT
611 IC CHIP
615 INSULATING BASE MATERIAL
620 ARTIFICIAL MEDIUM
625 FIRST CONDUCTIVE LAYER
630 DIELECTRIC LAYER
635 SECOND CONDUCTIVE LAYER
700 SEVENTH RFID TAG
710 LOOP FEEDING ELEMENT
711 IC CHIP
715 INSULATING BASE MATERIAL
720 ARTIFICIAL MEDIUM

725 FIRST CONDUCTIVE LAYER
730 DIELECTRIC LAYER
735 SECOND CONDUCTIVE LAYER
800 FIRST REGION
810 SECOND REGION
840 THIRD REGION
850 FOURTH REGION
900 EIGHTH RFID TAG
915 INSULATING BASE MATERIAL
920 ARTIFICIAL MEDIUM
925 FIRST CONDUCTIVE LAYER
930 DIELECTRIC LAYER
935 SECOND CONDUCTIVE LAYER
1000 FIRST REGION
1010 SECOND REGION
1015 THIRD REGION
1040 FOURTH REGION
1050 FIFTH REGION

## Claims

**1.** An RFID tag comprising:

a loop feeding element formed on a base material;
an IC chip that is electrically connected to the loop feeding element and that is laid on the base material; and
an artificial medium that includes a dielectric layer having a first surface and a second surface, a first conductive layer laid over the first surface, and a second conductive layer laid over the second surface and on which the base material is stacked, wherein:

the first surface is placed closer to the loop feeding element than the second surface; and
when viewed from a stack direction in which the loop feeding element is to be stacked on the artificial medium, the loop feeding element is placed so as to enclose a part of an edge portion of the first conductive layer of the artificial medium.

**2.** The RFID tag according to claim 1, wherein
when viewed from the stack direction, the loop feeding element is placed so that a center of the loop feeding element is aligned to the edge portion of the first conductive layer of the artificial medium.

**3.** The RFID tag according to claim 1 or 2, wherein
a thickness of the base material is 5 μm to 200 μm.

**4.** The RFID tag according to any one of claims 1 through 3, wherein
when a maximum value of radiation efficiency R of radiation characteristics of the RFID tag is taken as $R_p$, when a frequency at which the maximum radiation efficiency $R_p$ is attained is taken as $f_p$, when radiation efficiency that is lower than the maximum radiation efficiency $R_p$ by 3 dB is taken as $_{R3dB}$, when frequencies at which the radiation efficiency $_{R3dB}$ is acquired are taken as $f_1$ and $f_2$ (where $f_1 < f_2$), when an intermediate frequency between the frequencies $f_1$ and $f_2$ is taken as $f_r$, and when a specific bandwidth B(%) is calculated by a following equation:

$$\text{specific bandwidth } B(\%) = (f_2 - f_1)/f_r \times 100 \quad \text{(Equation 1)},$$

the specific bandwidth B exceeds 15%.

**5.** An RFID tag comprising:

an artificial medium that includes a dielectric layer having an upper surface with a first region and a second region and a bottom surface opposing the upper surface, a first conductive layer laid over the first region of the dielectric layer, and a second conductive layer laid over the bottom surface of the dielectric layer;
an insulating base material placed on the first conductive layer laid over the first region of the dielectric layer and the second region of the dielectric layer;
a loop feeding element that is formed on the insulating base material and that forms a closed region extending across the first region and the second region of the dielectric layer when viewed from a direction perpendicular to the upper surface; and
an IC chip electrically connected to the loop feeding element.

**6.** An RFID tag comprising:

a feeding element fabricated on a base material;
an IC chip that is electrically connected to the loop feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein:

the first surface is closer to the feeding element than the second surface;
the first surface has a first region where the first conductive layer is laid and a second region where the first conductive layer is not laid when viewed from a stack direction in which the feeding element is to be stacked on the artificial medium, and the first conductive layer has an edge portion corresponding to a border between the first region and the second region;
the feeding element has a loop line laid so as to enclose a part of the edge portion of the first conductive layer of the artificial medium when viewed from the stack direction; and
an additional line coupled to the loop line so as to divide a region enclosed with the loop line into at least two sub-regions is laid within the region.

**7.** The RFID tag according to claim 6, wherein
the additional line is laid on the first conductive layer so as not to cross the edge portion when viewed from the stack direction.

**8.** The RFID tag according to claim 7, wherein:

the feeding element further has a second additional line within the region enclosed with the loop line; and
the second additional line is laid so as to cross the edge portion of the first conductive layer when viewed from the stack direction.

**9.** The RFID tag according to claim 8, wherein
the second additional line is coupled to any position along the additional line.

**10.** An RFID tag comprising:

a feeding element fabricated on a base material;
an IC chip that is electrically connected to the feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein:

the first surface is placed closer to the feeding element than the second surface;
when viewed from a stack direction in which the feeding element is to be stacked on the artificial medium, the first surface has a first region where the first conductive layer is laid and a second region where the first conductive layer is not laid, and the first conductive layer has an edge portion corresponding to a border between the first region and the second region;
the feeding element has a loop line laid so as to enclose a part of the edge portion of the first conductive layer of the artificial medium when viewed from the stack direction;
the loop line of the feeding element is coupled to the IC chip, and the IC chip is placed in an area of the loop line within the second region when viewed from the stack direction; and

when viewed from the stack direction, a distance from the position of the loop line where the IC chip is placed to a position where the loop line first crosses the edge portion of the first conductive layer in a first direction aligned to the loop line is different from a distance from the position of the loop line where the IC chip is placed to a position where the loop line first crosses the edge portion of the first conductive layer along the loop line and in a second direction opposite to the first direction.

**11.** The RFID tag according to claim 10, wherein the loop line assumes a substantially rectangular shape, and the IC chip is placed at a corner of the loop line.

**12.** An RFID tag comprising:

a feeding element fabricated on a base material;
an IC chip that is electrically connected to the feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein:

the first surface is placed closer to the feeding element than the second surface;
when viewed from a stack direction in which the feeding element is to be stacked on the artificial medium, the first surface has a first region where the first conductive layer is laid and a second region where the first conductive layer is not laid, and the first conductive layer has an edge portion corresponding to a border between the first region and the second region;
the feeding element has a loop line laid so as to enclose a part of the edge portion of the first conductive layer of the artificial medium when viewed from the stack direction;
the first conductive layer assumes a substantially rectangular shape when viewed in the stack direction; and
a pair of diagonally-aligned corners is eliminated from the first conductive layer or has projections.

**13.** An RFID tag comprising:

a feeding element fabricated on a base material;
an IC chip that is electrically connected to the loop feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein:

the first surface is placed closer to the feeding element than the second surface;
when viewed from a stack direction in which the feeding element is to be stacked on the artificial medium, the first surface has a first region on which the first conductive layer is placed and second and third regions where the first conductive layer is not placed, the second region of the dielectric layer adjoins to the first region, and the third region is on the other side of the second region and adjoins to the first region and does not adjoin to the second region;
the first conductive layer has an edge portion corresponding to a border between the first region and the second region; and
when viewed from the stack direction, the feeding element has a loop line laid so as to enclose a part of the edge portion of the first conductive layer of the artificial medium, and the loop line is laid only on the first and second regions.

**14.** An RFID tag comprising:

a feeding element fabricated on a base material;
an IC chip that is electrically connected to the feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein:

the first surface is placed closer to the feeding element than the second surface;
when viewed from a stack direction in which the feeding element is to be stacked on the artificial medium, the feeding element has a loop line laid so as to enclose a part of an edge portion of the first conductive layer of the artificial medium;
when viewed from the stack direction, the dielectric layer has a first region and second to fourth regions adjoining to the first region, the third and fourth regions are placed so as to oppose each other with the first region sandwiched therebetween, and the second region adjoins to each of the third and fourth regions;
the first conductive layer is placed so as to cover the first region and not on the second region, the third region, and the fourth region; and
the loop line is placed only on the first and second regions.

**15.** An RFID tag comprising:

a feeding element fabricated on a base material;
an IC chip that is electrically connected to the feeding element and that is placed on the base material; and
an artificial medium that includes a dielectric layer having a first surface and a second surface, a first conductive layer laid over the first surface, and a second conductive layer laid over the second surface, and on which the base material is to be stacked, wherein:

the first surface is placed closer to the feeding element than the second surface;
when viewed from a stack direction in which the feeding element is to be stacked on the artificial medium, the feeding element has a loop line laid so as to enclose a part of an edge portion of the first conductive layer of the artificial medium;
when viewed from the stack direction, the dielectric layer has a first region, a second region, and a third region, the second region adjoins to the first region, and the third region adjoins to the first region on the other side of the second region;
the first conductive layer is placed so as to cover the first region and not placed on the second region or the third region; and
the loop line is placed only on the first and second regions.

**16.** The RFID tag according to claim 15, further comprising:

a fourth region and a fifth region that adjoin to the first region when viewed from the stack direction, wherein:

the fourth region and the fifth region are placed so as to oppose each other with the first region sandwiched therebetween, the second region adjoins to each of the fourth region and the fifth region, and the third region adjoins to each of the fourth region and the fifth region; and
the loop line is placed on neither the fourth region nor the fifth region.

FIG. 1

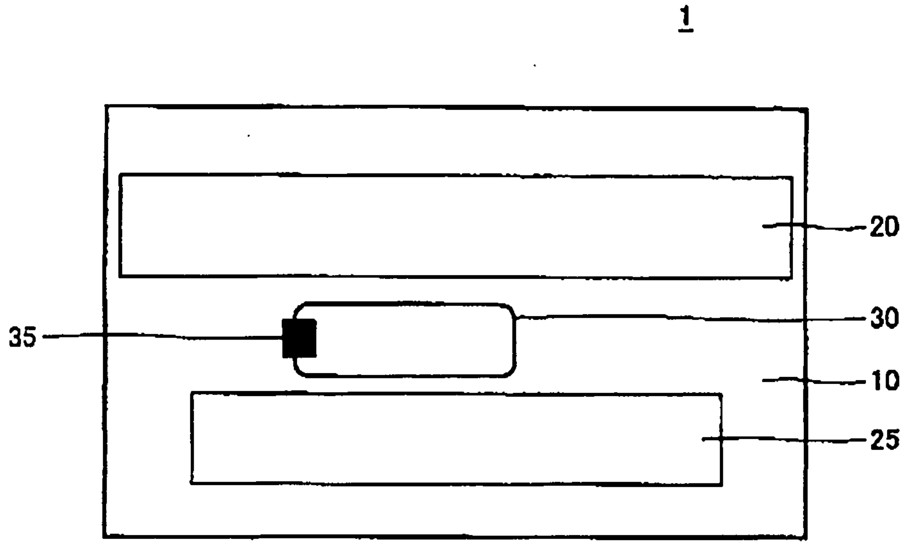
1
20
30
35
10
25

FIG. 2

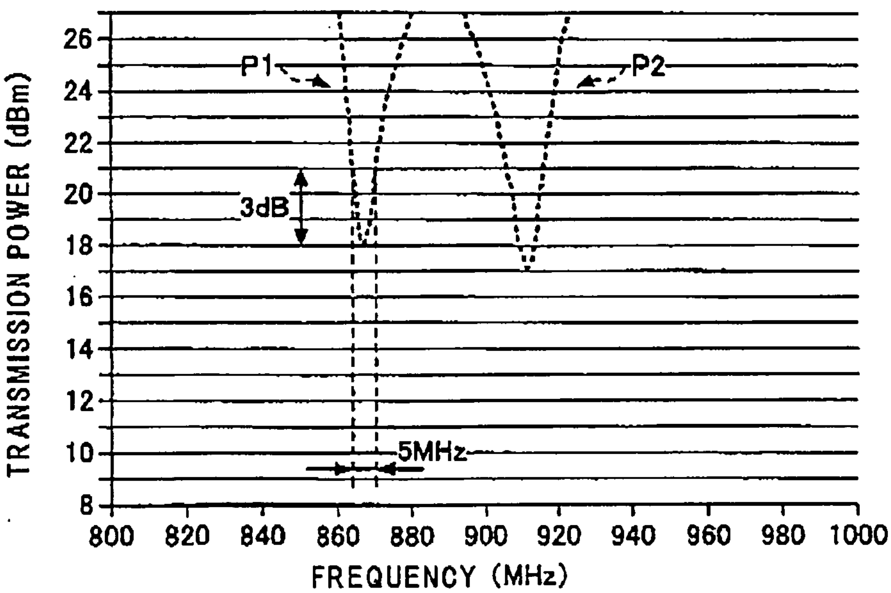
TRANSMISSION POWER (dBm)
26
24
22
20
18
16
14
12
10
8
P1
P2
3dB
5MHz
800
820
840
860
880
900
920
940
960
980
1000
FREQUENCY (MHz)

*FIG. 3*

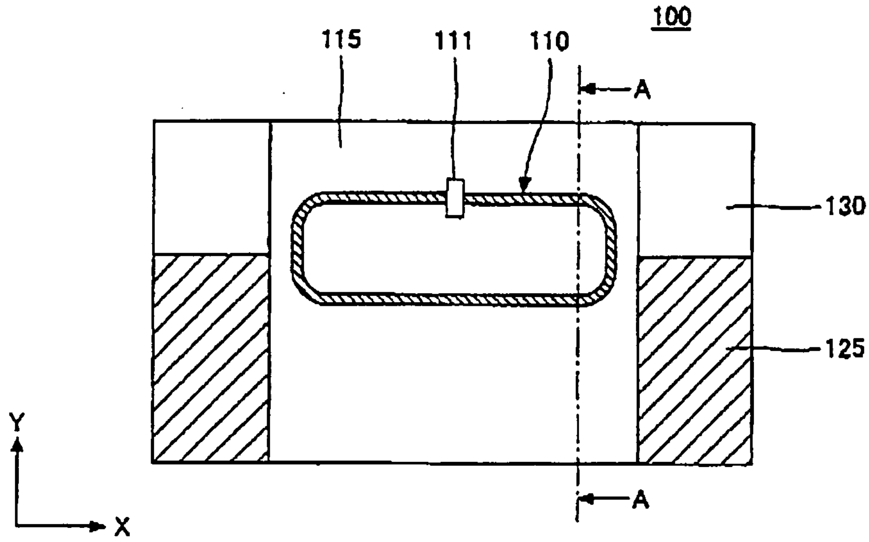
100
115
111
110
A
130
125
Y
X
A

*FIG. 4*

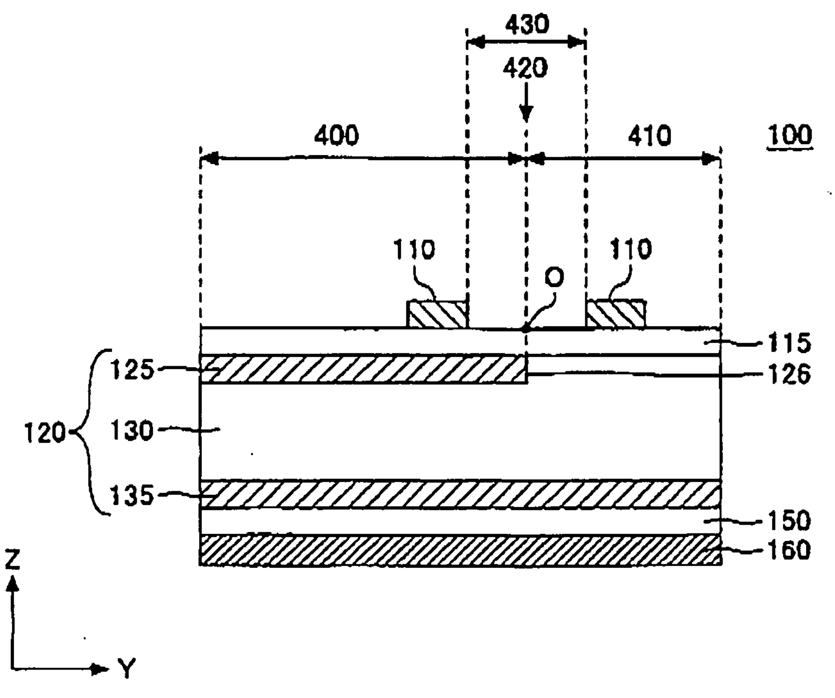
430
420
400
410
100
110
110
O
115
125
126
120
130
135
150
160
Z
Y

FIG. 5

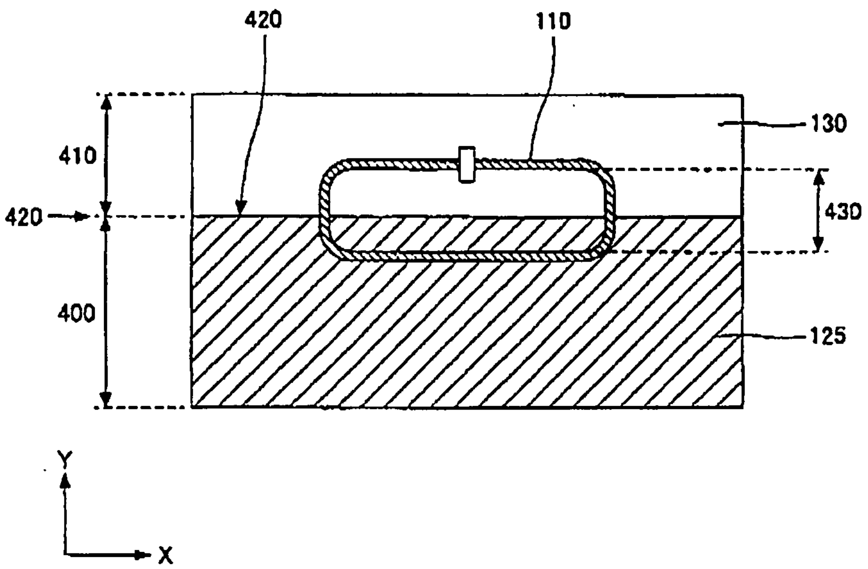
420
110
130
410
420
430
400
125
Y
X

FIG. 6

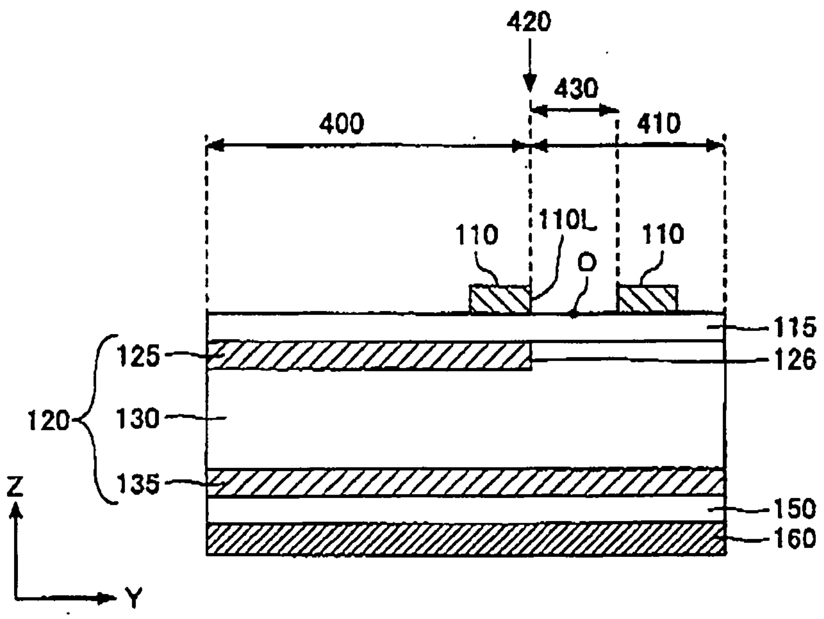
420
430
400
410
110
110L
110
O
115
125
126
120
130
135
150
160
Z
Y

FIG. 7

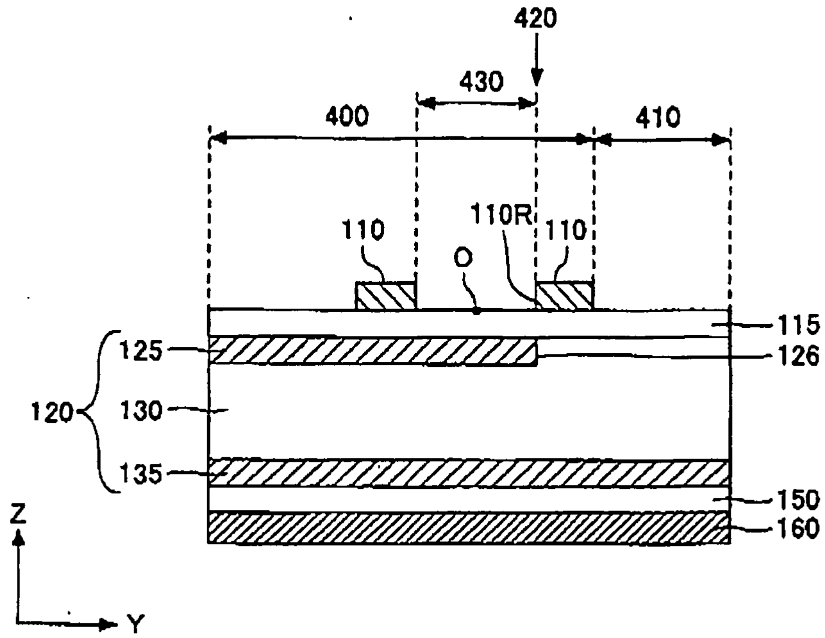

*FIG. 8*

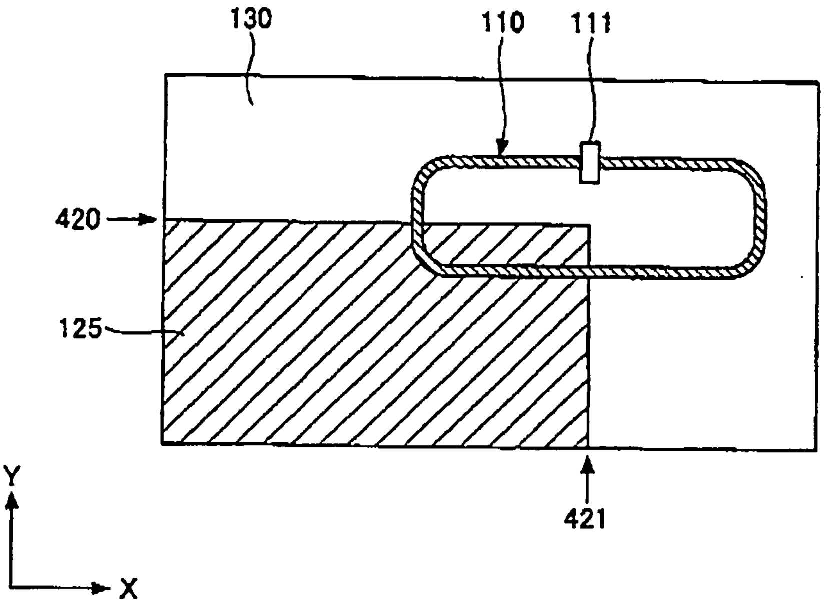


*FIg. 9*

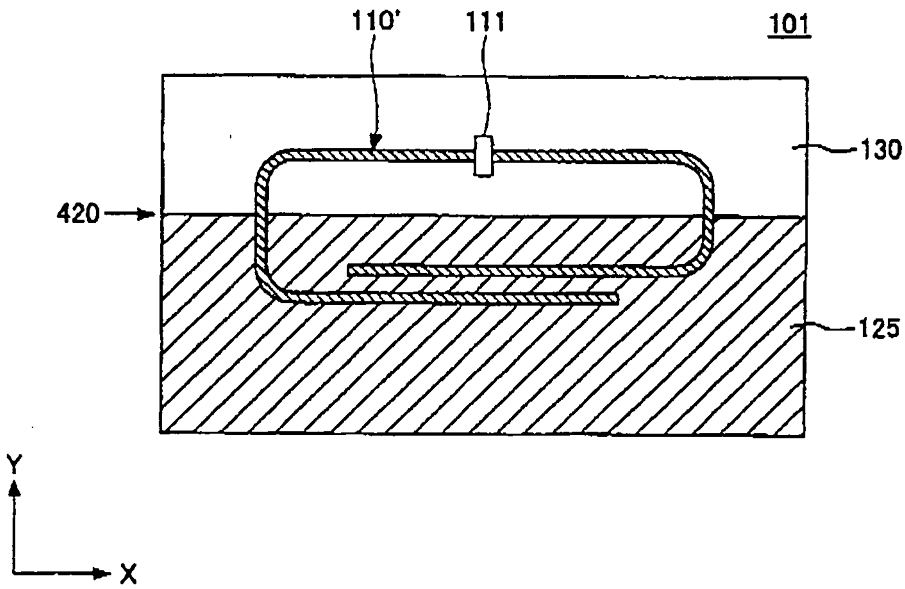

FIG. 10

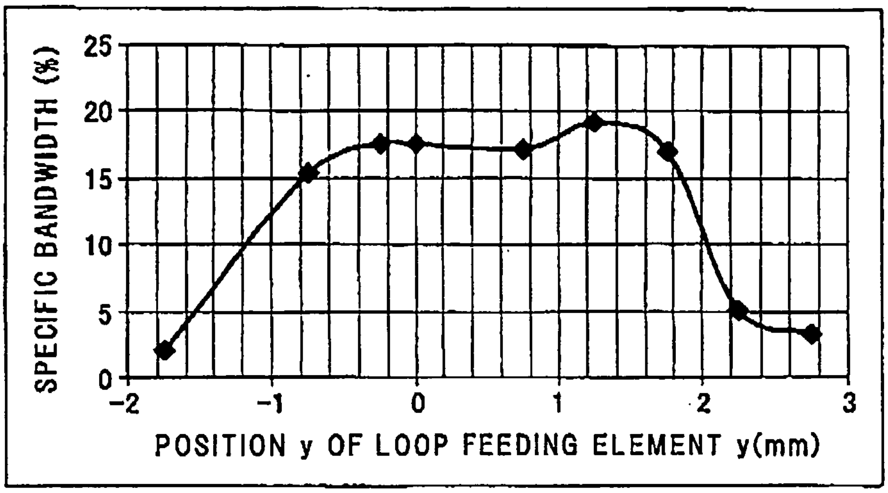
SPECIFIC BANDWIDTH (%)
25
20
15
10
5
0
-2
-1
0
1
2
3
POSITION y OF LOOP FEEDING ELEMENT y(mm)

FIG. 11

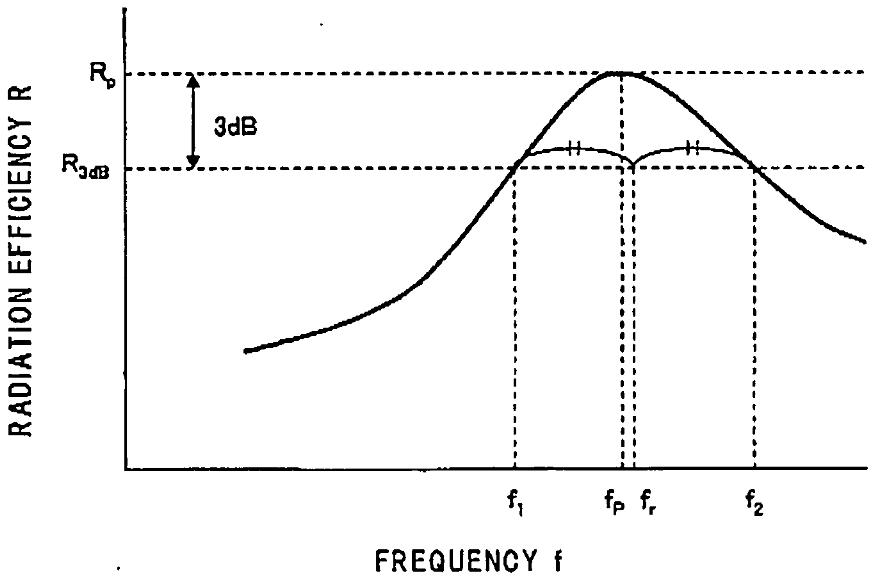
RADIATION EFFICIENCY R
Rp
3dB
R3dB
f1
fP
fr
f2
FREQUENCY f

*FIG. 12*

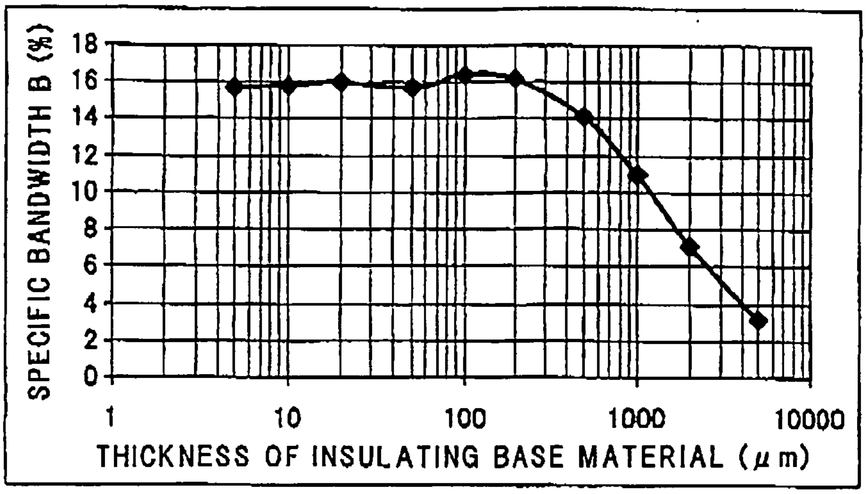
SPECIFIC BANDWIDTH B (%)
18
16
14
12
10
8
6
4
2
0
1
10
100
1000
10000
THICKNESS OF INSULATING BASE MATERIAL (μm)

*FIG. 13*

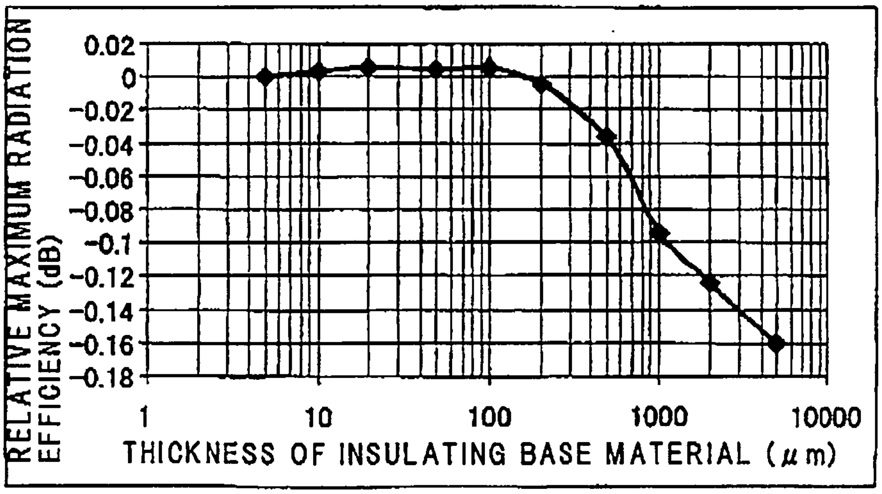
RELATIVE MAXIMUM RADIATION EFFICIENCY (dB)
0.02
0
-0.02
-0.04
-0.06
-0.08
-0.1
-0.12
-0.14
-0.16
-0.18
1
10
100
1000
10000
THICKNESS OF INSULATING BASE MATERIAL (μm)

*FIG. 14*

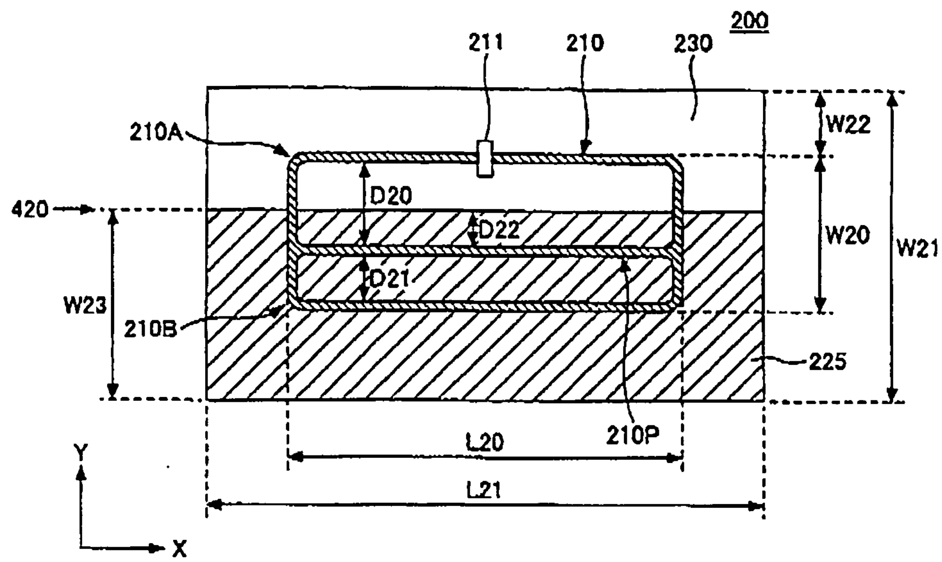


*FIG. 15A*

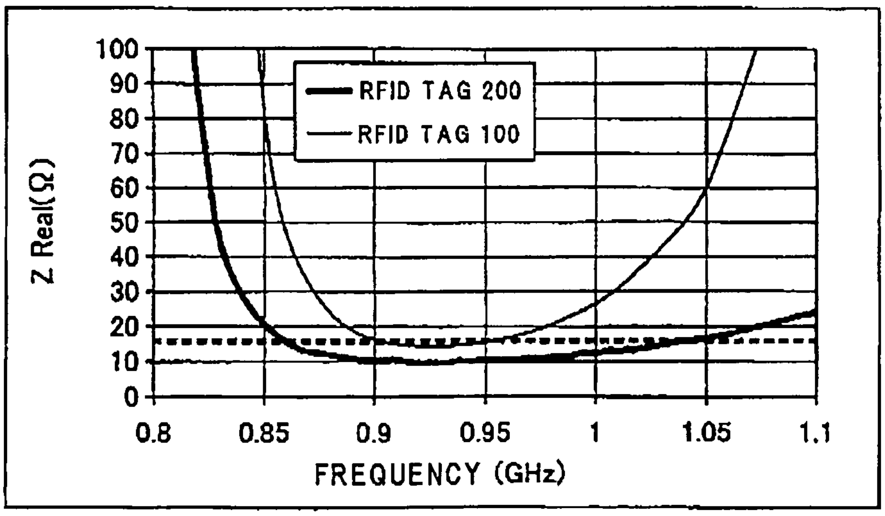

*FIG. 15B*

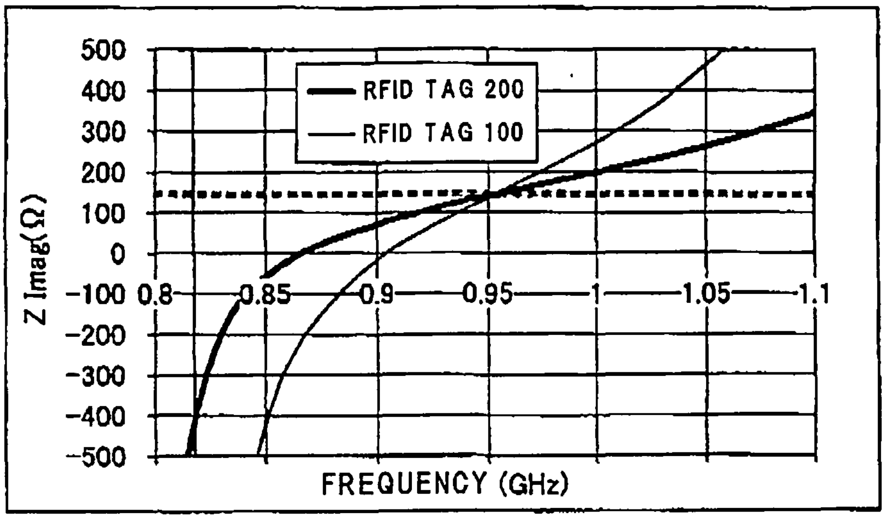


*FIG. 16*

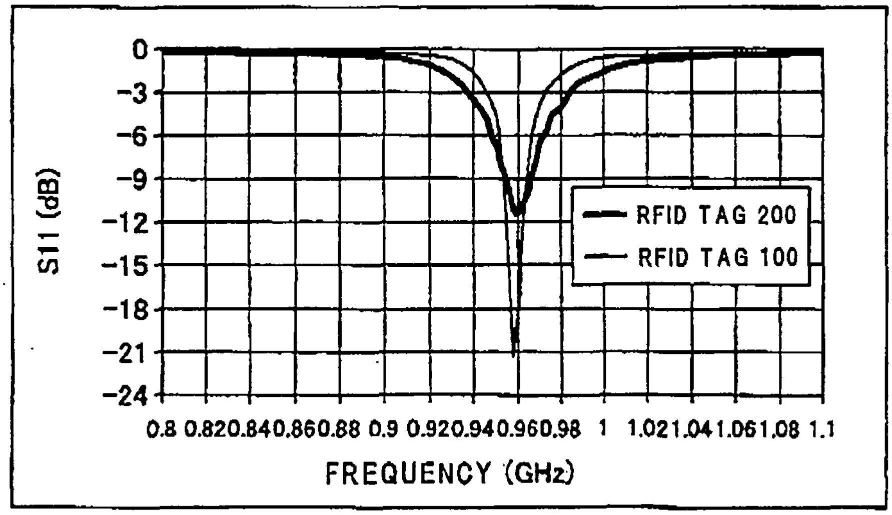

FIG. 17

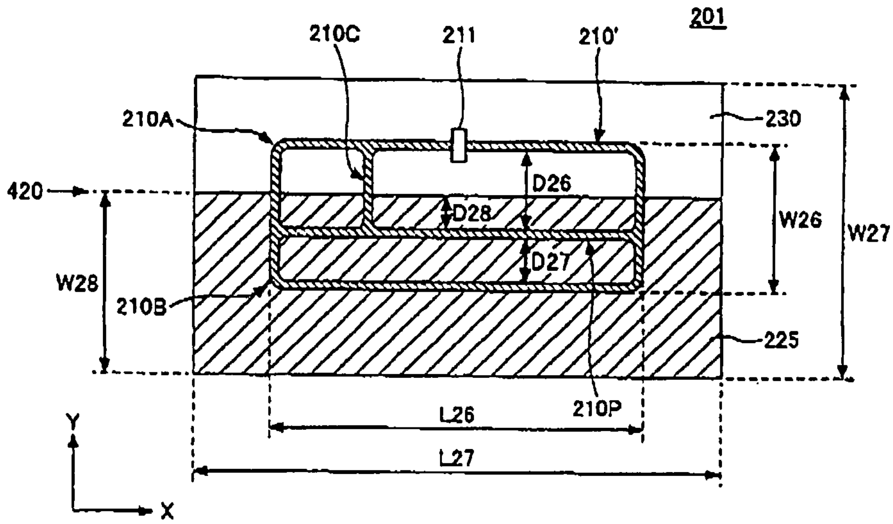


FIG. 18A

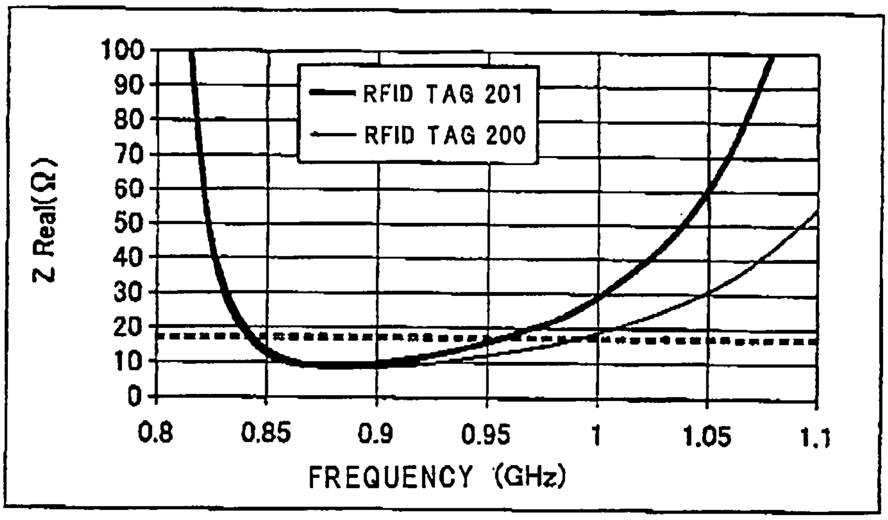

*FIG. 18B*

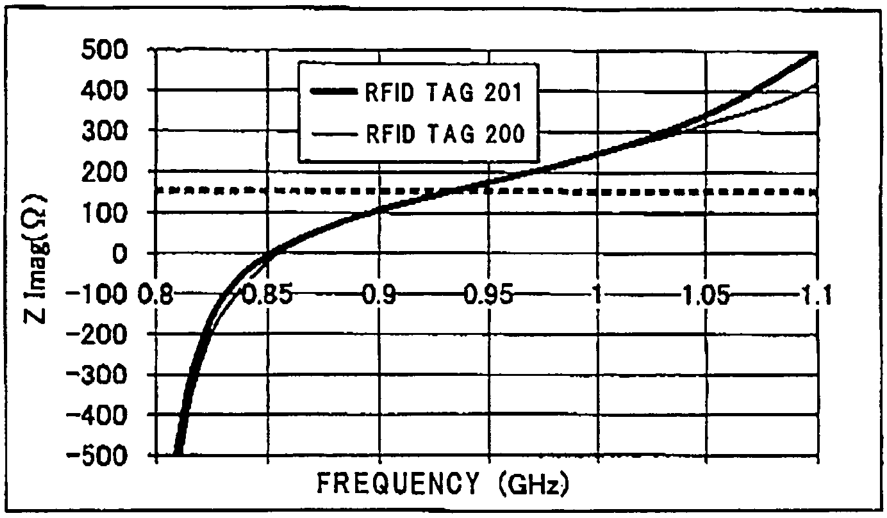


*FIG. 19*

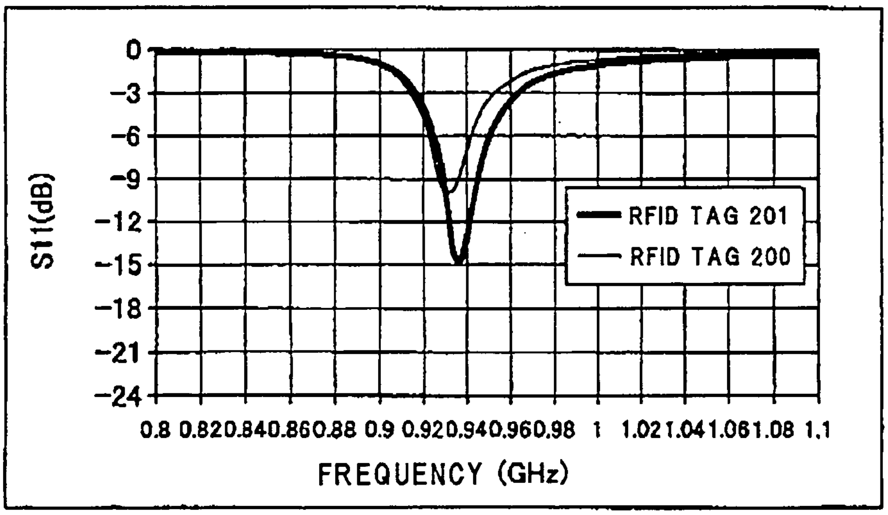

FIG. 20

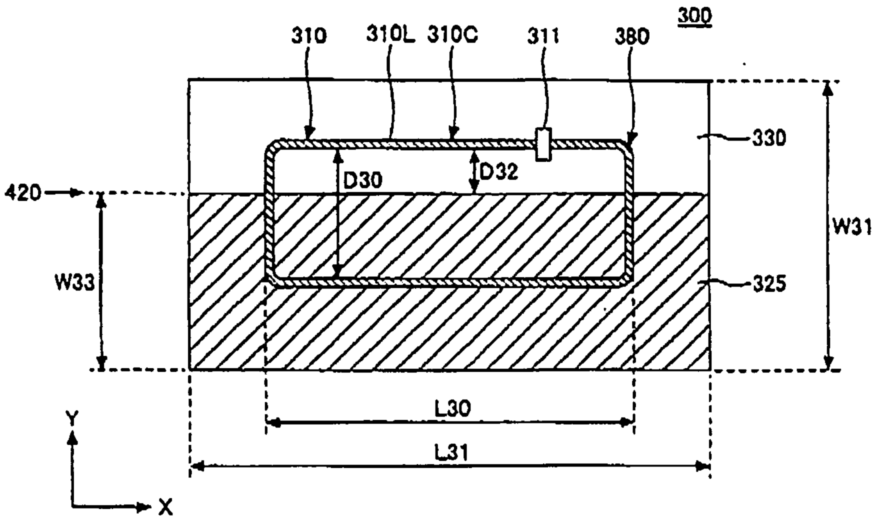
300
310
310L
310C
311
380
330
420
D30
D32
W33
W31
325
L30
L31
Y
X

FIG. 21

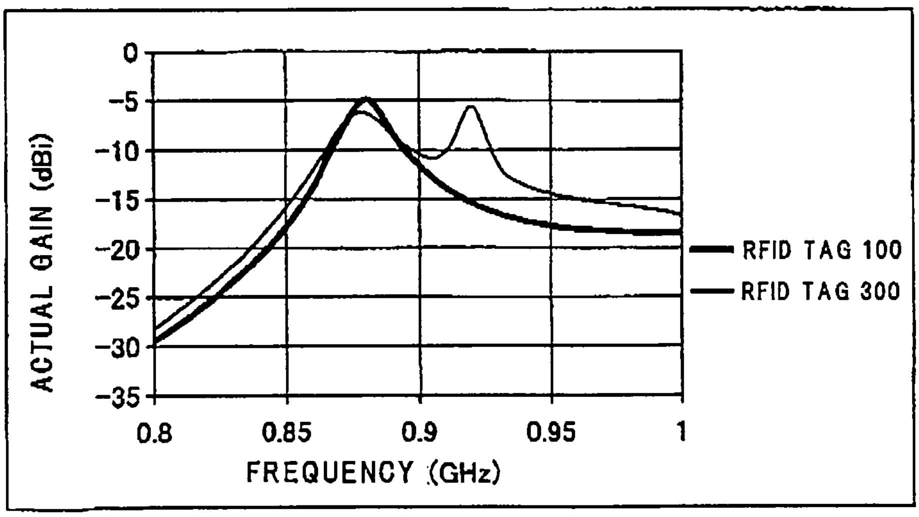
ACTUAL GAIN (dBi)
0
-5
-10
-15
-20
-25
-30
-35
0.8
0.85
0.9
0.95
1
FREQUENCY (GHz)
RFID TAG 100
RFID TAG 300

FIG. 22

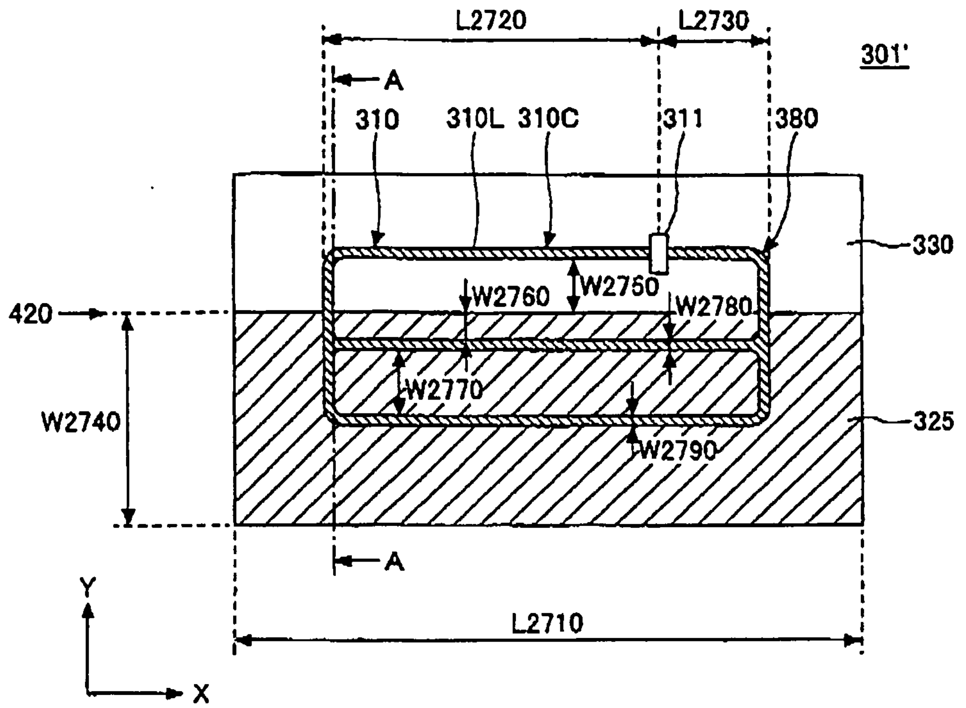
L2720
L2730
301'
A
310
310L
310C
311
380
330
W2760
W2750
W2780
420
W2770
W2740
325
W2790
A
Y
L2710
X

FIG. 23

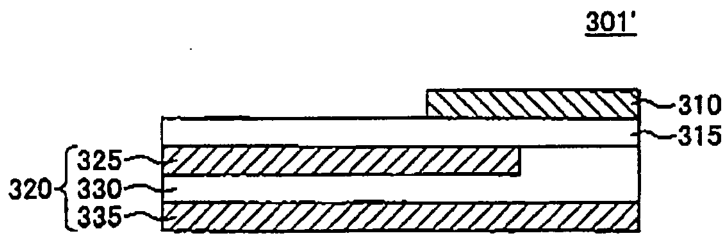
301'
310
315
325
320
330
335

*FIG. 24*

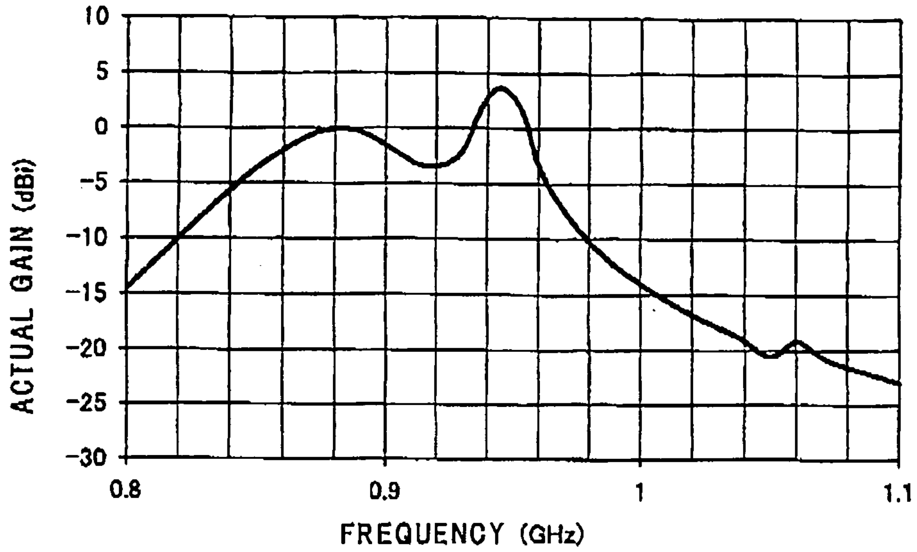
ACTUAL GAIN (dBi)
10
5
0
-5
-10
-15
-20
-25
-30
0.8
0.9
1
1.1
FREQUENCY (GHz)

*FIG. 25*

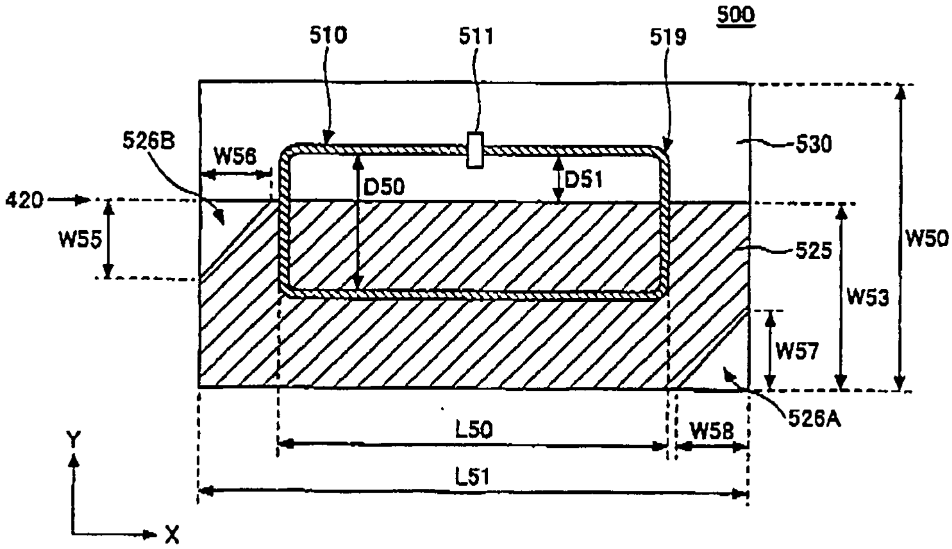
500
510
511
519
526B
W56
D50
D51
530
420
W55
525
W50
W53
W57
526A
L50
W58
L51
Y
X

*FIG. 26*

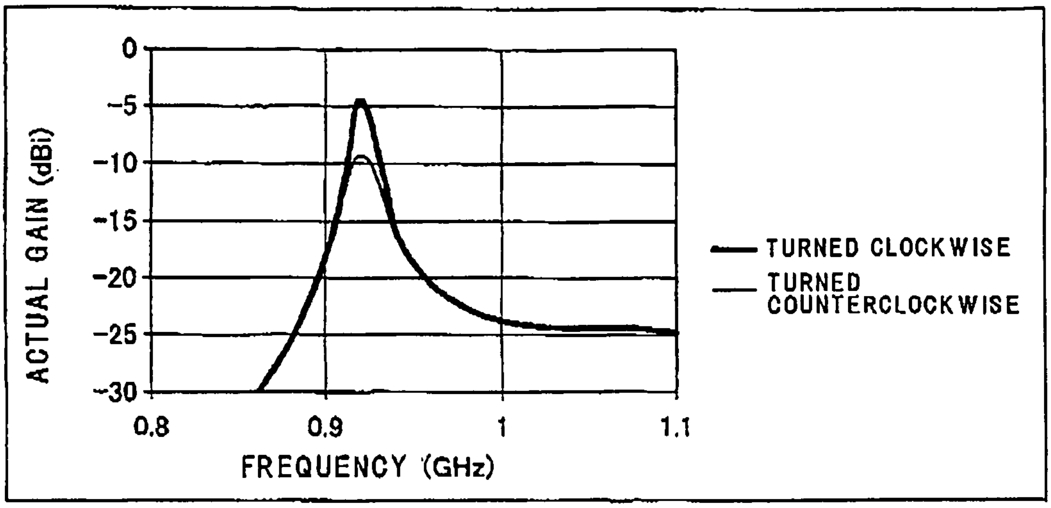
ACTUAL GAIN (dBi)
0
-5
-10
-15
-20
-25
-30
0.8
0.9
1
1.1
FREQUENCY (GHz)
TURNED CLOCKWISE
TURNED COUNTERCLOCKWISE

*FIG. 27*

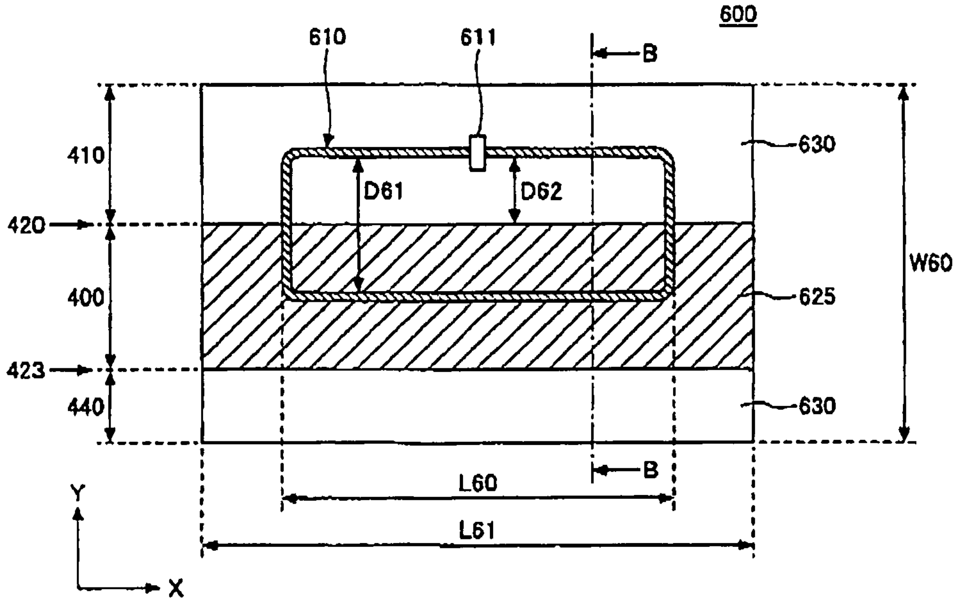
600
610
611
B
410
420
400
423
440
D61
D62
630
625
630
W60
L60
L61
B
Y
X

FIG. 28

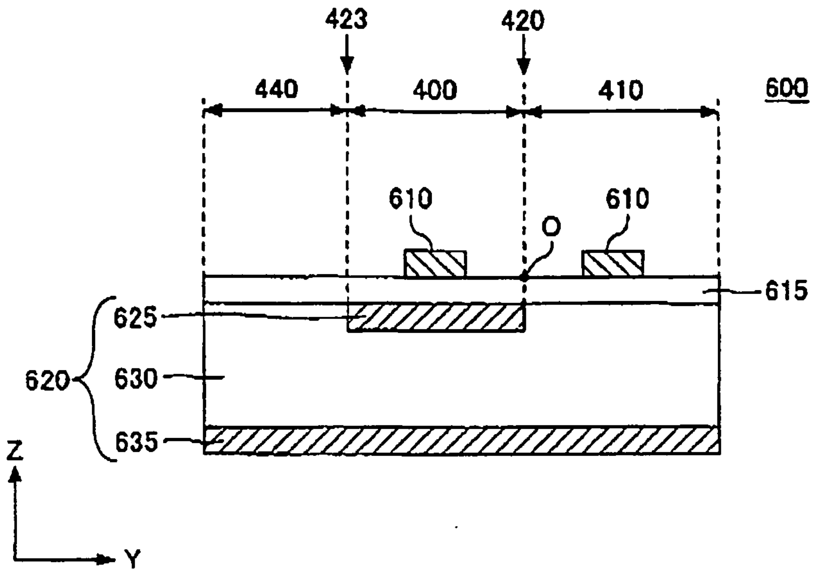
423
420
440
400
410
600
610
610
O
615
625
620
630
635
Z
Y

FIG. 29

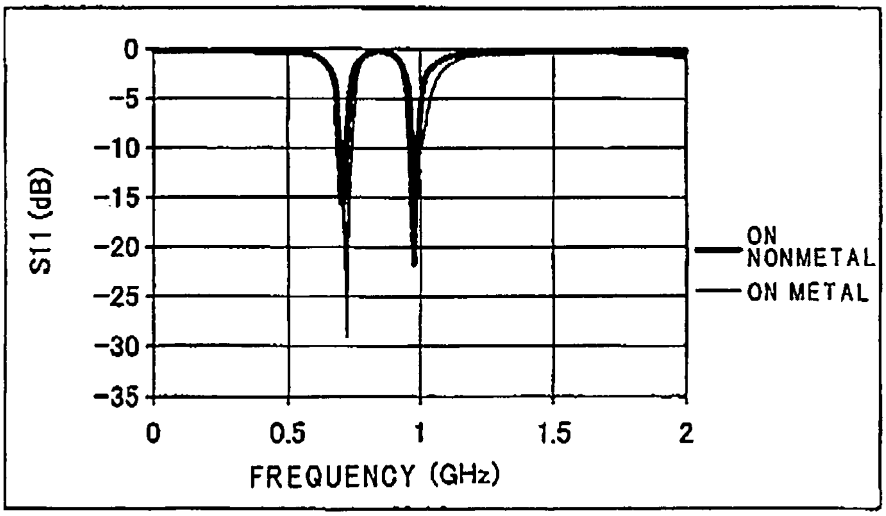
S11 (dB)
0
-5
-10
-15
-20
-25
-30
-35
0
0.5
1
1.5
2
FREQUENCY (GHz)
ON NONMETAL
ON METAL

FIG. 30

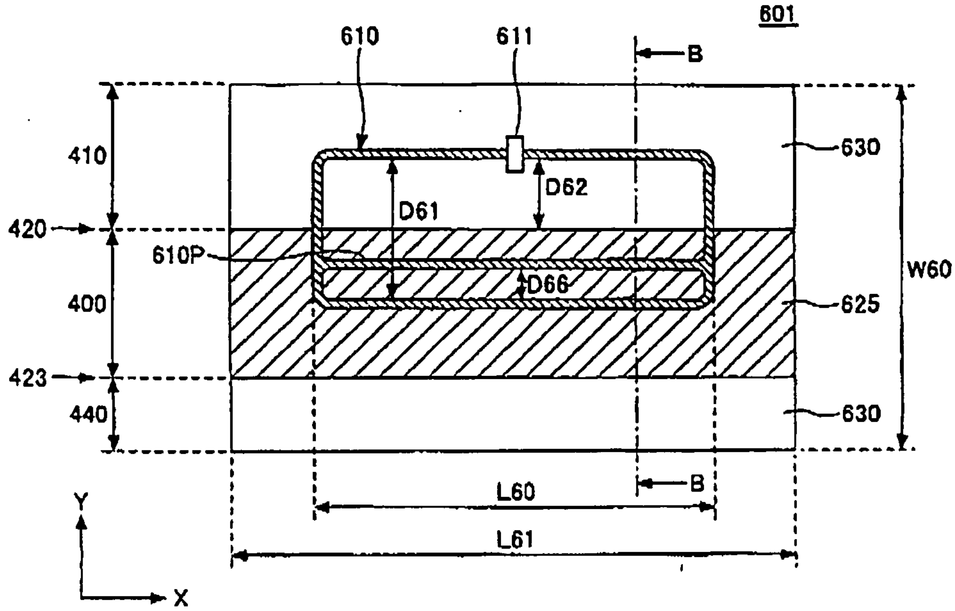
601
610
611
B
410
420
610P
400
423
440
D61
D62
D66
630
625
630
W60
B
L60
L61
Y
X

FIG. 31

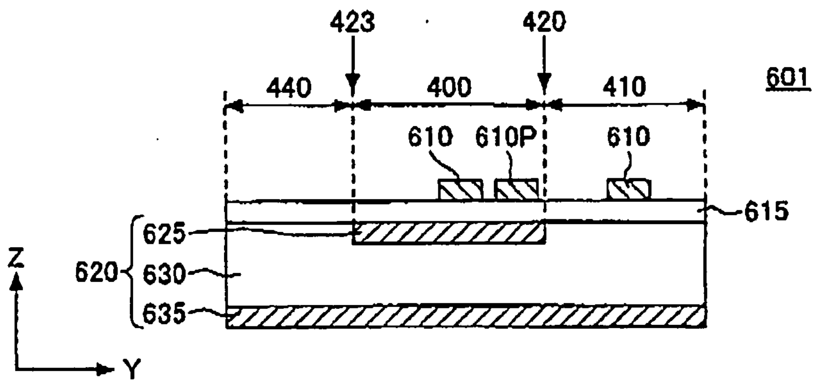
423
420
440
400
410
601
610
610P
610
615
625
620
630
635
Z
Y

*FIG. 32A*

XY PLANE

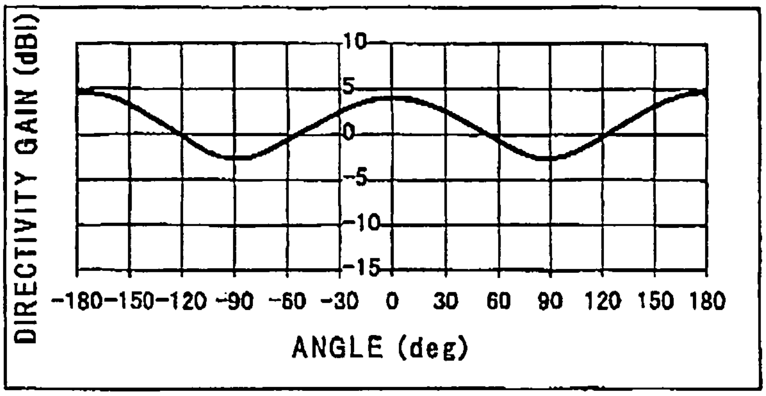


*FIG. 32B*

YZ PLANE

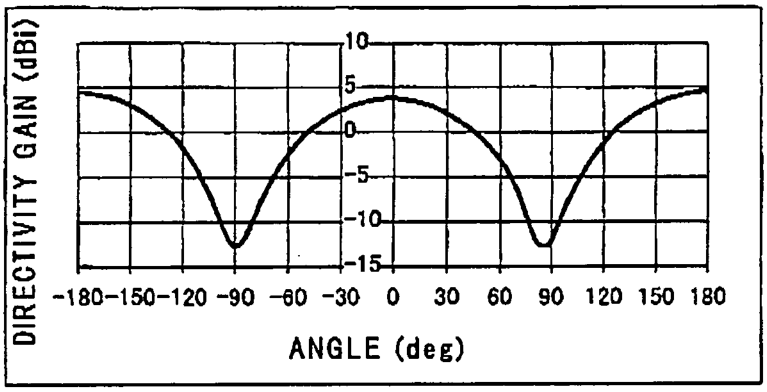

FIG. 33

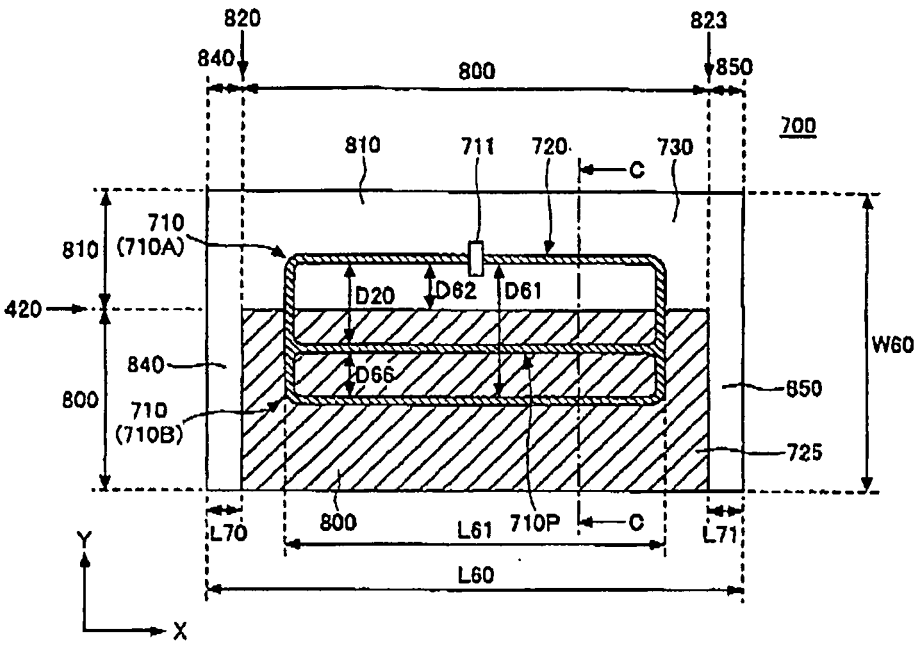
820
823
840
800
850
700
810
711
720
730
C
710
(710A)
810
D20
D62
D61
420
W60
840
D66
850
800
710
(710B)
725
800
L61
710P
C
L70
L71
L60
Y
X

FIG. 34

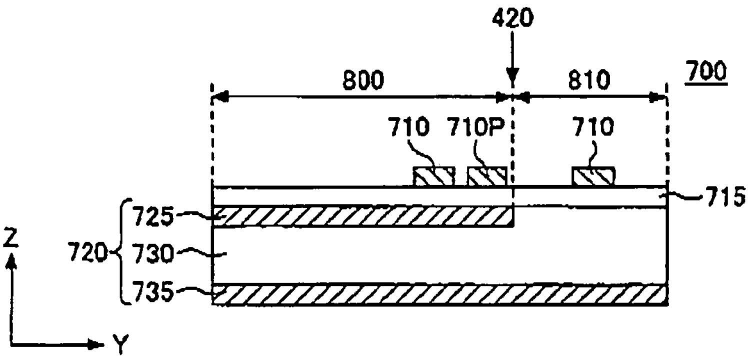
420
800
810
700
710
710P
710
715
725
720
730
735
Z
Y

FIG. 35A

XY PLANE

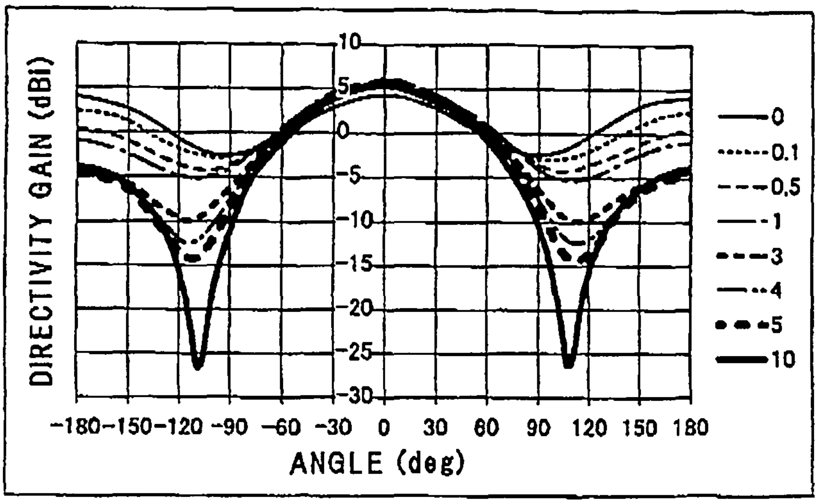


FIG. 35B

YZ PLANE

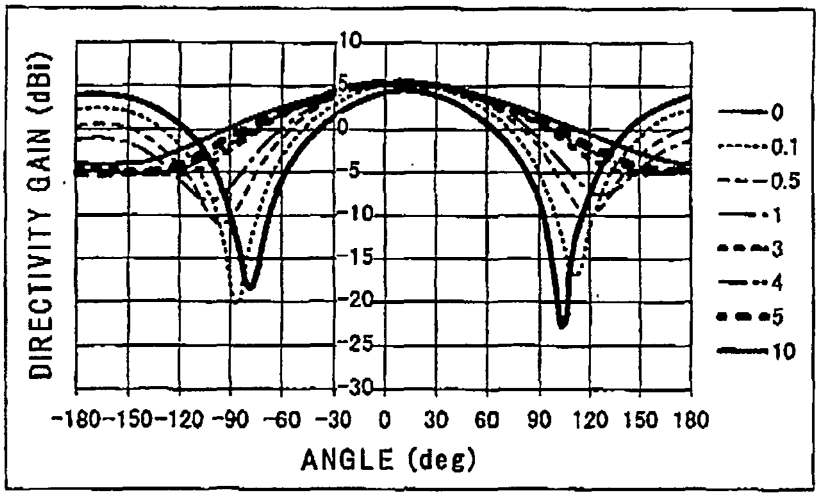

FIG. 36

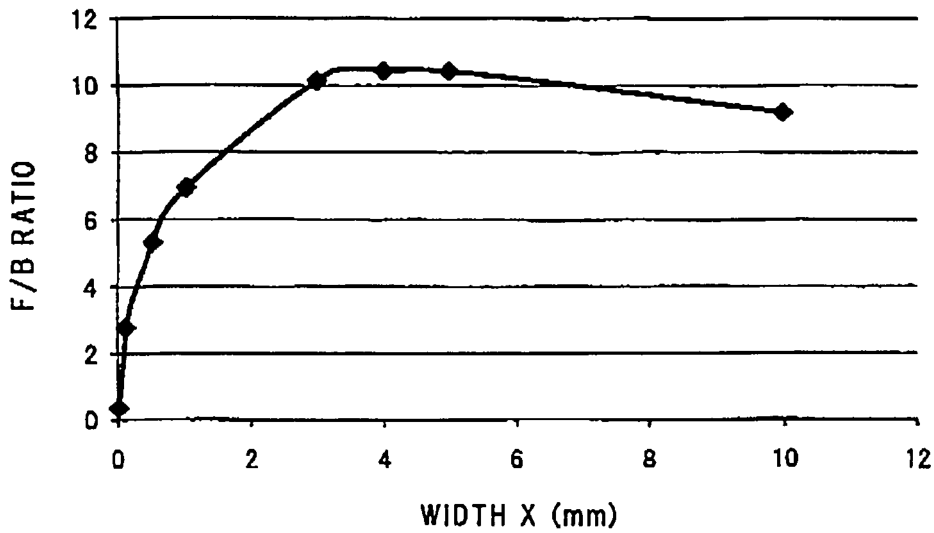
F/B RATIO
12
10
8
6
4
2
0
0
2
4
6
8
10
12
WIDTH X (mm)

FIG. 37

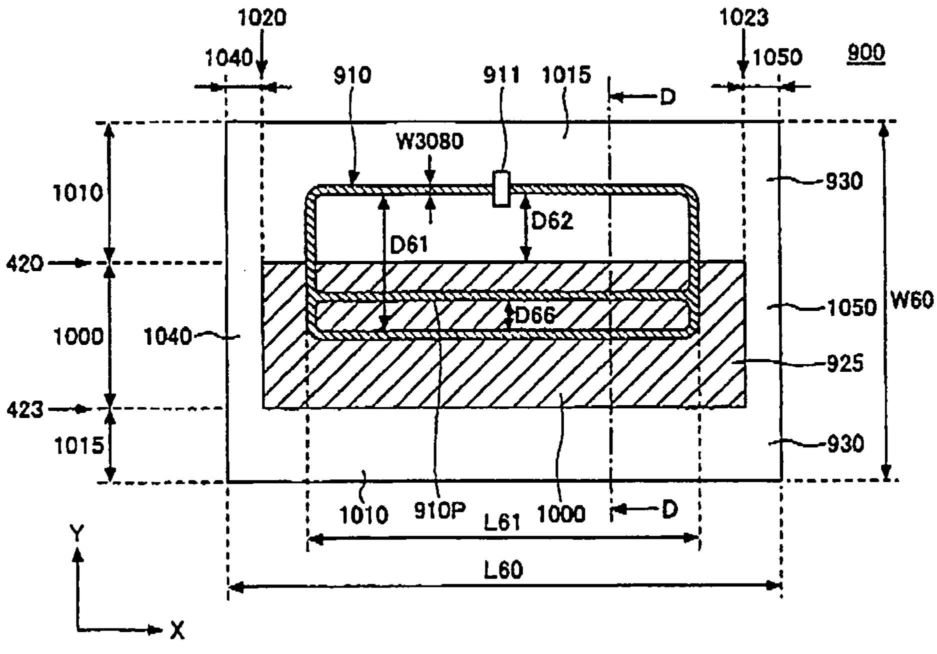
1020
1023
1040
1050
900
910
911
1015
D
W3080
930
1010
D62
D61
420
1050
W60
1000
1040
D66
925
423
930
1015
1010
910P
L61
1000
D
L60
Y
X

FIG. 38

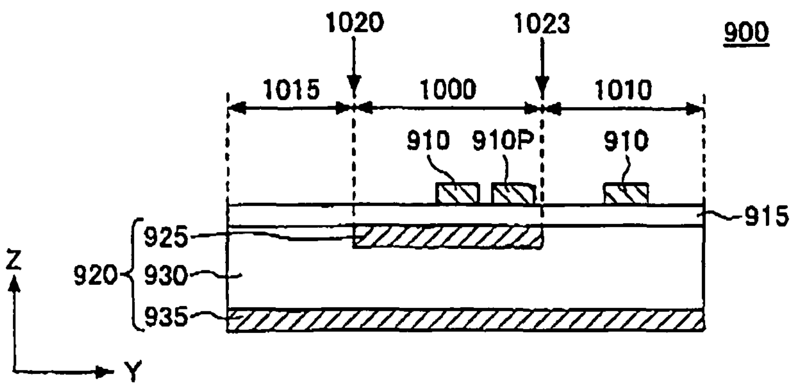


FIG. 39A

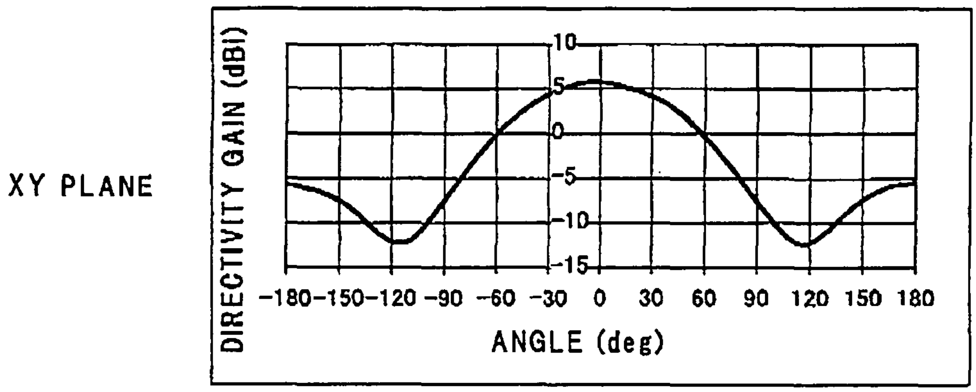


FIG. 39B

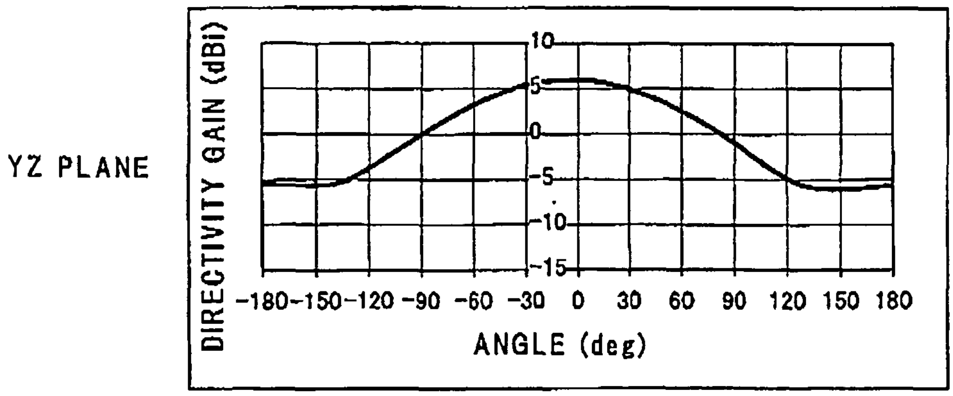

**INTERNATIONAL SEARCH REPORT**

International application No.
PCT/JP2010/073248

A. CLASSIFICATION OF SUBJECT MATTER
*H01Q1/38*(2006.01)i, *G06K19/077*(2006.01)i, *H01Q7/00*(2006.01)i, *H01Q15/14*
(2006.01)i

According to International Patent Classification (IPC) or to both national classification and IPC

B. FIELDS SEARCHED

Minimum documentation searched (classification system followed by classification symbols)
H01Q1/38, G06K19/077, H01Q7/00, H01Q15/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,A | WO 2010/013810 A1 (Asahi Glass Co., Ltd.), 04 February 2010 (04.02.2010), entire text; all drawings (Family: none) | 1-16 |
| A | WO 2008/136530 A1 (Asahi Glass Co., Ltd.), 13 November 2008 (13.11.2008), entire text; all drawings & JP 2009-153089 A & EP 2148386 A1 & US 2010/0053019 A | 1-16 |
| A | WO 2008/062562 A1 (NEC Tokin Corp.), 29 May 2008 (29.05.2008), paragraphs [0035] to [0044]; fig. 9 to 13 & US 2010/0053013 A | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 March, 2011 (29.03.11) | 12 April, 2011 (12.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/073248

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-203877 A (Toshiba Corp.), 28 July 2005 (28.07.2005), paragraphs [0030] to [0045]; fig. 13 to 14, 20 to 22 & US 2005/0153755 A1 & EP 1555717 A1 & DE 602004005958 D | 6-8 |
| A | WO 2007/013338 A1 (Matsushita Electric Industrial Co., Ltd.), 01 February 2007 (01.02.2007), entire text; all drawings (Family: none) | 1 |
| A | Dong-Uk Sim, Design of novel dipole-type tag antennas using electromagnetic bandgap (EBG) surface for passive RFI, Antennas and Propagation International Symposium, 2007 IEEE 9-15 June 2007, 2007.06.15, Page(s):1333 - 1336 | 1-16 |
| A | Bo Gao, Ultrathin low cost Electromagnetic Band Gap (EBG) materials as UHF RFID tag substrate, Electronic Materials and Packaging, 2006. EMAP 2006. International Conference on 11-14 Dec. 2006, 2006.12.14, Page(s):1 - 4 | 1-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008006947 A
- JP 2009292898 A
- JP 2010231940 A